(19) Europäisches Patentamt
European Patent Office
Office européen des brevets

(11) EP 2 717 353 B1

(12) # EUROPEAN PATENT SPECIFICATION

(45) Date of publication and mention of the grant of the patent:
**02.11.2016 Bulletin 2016/44**

(21) Application number: **12793879.3**

(22) Date of filing: **31.05.2012**

(51) Int Cl.:
***H01M 2/16*** (2006.01)
***H01M 4/36*** (2006.01)
***H01M 10/42*** (2006.01)
***C09D 133/04*** (2006.01)
***H01M 4/62*** (2006.01)

(86) International application number:
**PCT/JP2012/064165**

(87) International publication number:
**WO 2012/165578 (06.12.2012 Gazette 2012/49)**

(54) **COATING AGENT COMPOSITION FOR BATTERY ELECTRODES OR SEPARATORS**

BESCHICHTUNGSMITTELZUSAMMENSETZUNG FÜR BATTERIEELEKTRODEN ODER SEPARATOREN

COMPOSITION D'AGENT DE REVÊTEMENT POUR ÉLECTRODES OU SÉPARATEURS DE BATTERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.06.2011 JP 2011124556**

(43) Date of publication of application:
**09.04.2014 Bulletin 2014/15**

(73) Proprietor: **The Nippon Synthetic Chemical Industry Co., Ltd.**
**Osaka-shi, Osaka 530-0018 (JP)**

(72) Inventors:
- **UEMURA, Taichi**
  **Kisarazu-shi, Chiba 292-0834 (JP)**
- **YAMAZAKI, Satoshi**
  **Sagamihara-shi, Kanagawa 252-0314 (JP)**
- **SHIBUTANI, Mitsuo**
  **Osaka-shi, Osaka 530-0018 (JP)**
- **AIBA, Kazuo**
  **Osaka-shi, Osaka 530-0018 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 166 028**
**WO-A1-2011/013604**
**JP-A- 2007 067 352**
**JP-A- 2007 161 795**
**JP-A- 2008 130 571**
**JP-A- 2009 301 765**
**JP-A- 2010 102 868**
**JP-A- 2010 225 545**
**JP-A- 2011 503 828**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 717 353 B1

## Description

FIELD OF THE INVENTION

The present invention relates to the use of a composition for coating the battery electrode or the battery separator of a lithium-ion battery with a protective coating. A lithium-ion battery comprising the coated battery electrode or the coated battery separator has high heat resistance, excellent safety, low internal resistance, excellent charge/discharge cycle characteristics, and large charge and discharge capacity as well as long charge/discharge cycle life.

BACKGROUND ART

As a storage battery being lightweight and having a high voltage and a large capacity, a lithium-ion secondary battery has been known, and has been put into practical use as a power source for mobile electric devices, such as a cell phone and a laptop computer, vehicles, and electric tools. However, a conventional lithium-ion secondary battery has an unsatisfactory charge/discharge cycle life and a high internal resistance, and hence has poor charge/discharge characteristics especially at high rate due to the low cycle life and high internal resistance. In addition, the conventional lithium-ion battery has a high energy density, and therefore there is a danger that when the battery suffers runaway heat generation, a chain reaction of the runaway heat generation vigorously proceeds in the battery, leading to breakage of the electric device having the battery mounted thereon or human damage.

One of the reasons why satisfactory safety of the battery cannot be provided as mentioned above resides in that with respect to the heat generation by the occurrence of short-circuiting due to the breakdown of the insulation by the separator caused by, e.g., mixing of conductive foreign matter, the generation of dendrite, or breakage of the battery, the method for preventing the runaway heat generation from rapidly proceeding in the battery is inappropriate.

As a method for solving the above problem, a method has been proposed in which the occurrence of short-circuiting due to the generation of dendrite is prevented by using a separator obtained by impregnating it with a dispersion of a surfactant and ceramic particles in water and drying the separator (patent document 1).

Further, a method has been proposed in which the occurrence of short-circuiting due to the generation of dendrite is prevented by forming, on the surface of an electrode, a porous layer comprising titanium oxide particles using PVA as a binder (patent document 2). A method has been proposed in which the occurrence of short-circuiting due to the generation of dendrite is prevented by preparing a synthetic bimolecular film of a multilayer metal oxide film as a template to form a metal oxide film having a large specific surface area, and disposing the film between the positive and negative electrodes (patent document 3).

Further, a method has been proposed in which the occurrence of short-circuiting due to the generation of dendrite or vigorous runaway heat generation in the battery caused by an accident or the like is prevented by forming a porous resin layer from polymer particles on the surface of an electrode (patent document 4).

Furthermore, a method has been proposed in which a polymer solid electrolyte membrane layer is formed on the surface of an electrode material to suppress the decomposition of an electrolytic solution due to an electrochemical reaction between the electrolytic solution and the electrode material, improving the charge/discharge capacity and cycle characteristics (patent document 5).

Moreover, a method has been proposed in which the occurrence of short-circuiting due to foreign matter mixed into the battery being produced during the production process is prevented by forming a coating film comprising alumina or silica particles and a binder on the separator or electrode surface to constitute an ionic conductive porous film (patent document 6).

However, in the above methods, the adhesion of the coating agent to the separator or electrode surface is not satisfactory, and further there is no satisfactory effect of relaxation of expansion and shrinkage stress of a material constituting the battery, such as an active material, caused due to the charging/discharging operation, leading to a problem in that the adhesion force, mechanical strength and others are lowered.

EP 2 166 028 A1 relates to an aqueous synthetic resin emulsion for a cement mortar admixture comprising a synthetic resin comprising a copolymer of at least one monomer (A) selected from an acrylic monomer and a styrene monomer, and at least one functional group-containing monomer (B) selected from the group consisting of (B1) a glycidyl-containing monomer, (B2) an allyl-containing monomer, (B3) a hydrolyzable silyl-containing monomer, (B4) an acetoacetyl-containing monomer, (B5) a monomer having at least two vinyl groups in a molecular structure thereof, and (B6) a hydroxyl-containing monomer; the synthetic resin being stably dispersed in the emulsion in the presence of a polyvinyl alcohol resin having an average saponification degree of not less than 85 mol% and an average polymerization degree of 50 to 3000 and having 1 to 15 mol% 1, 2-diol bonds on its side chains.

JP 2007-067352 A relates to an electrolyte for an electric double layer capacitor that is a water gel containing polyvinyl alcohol-based resin (A) having 1,2-diol structural units expressed by the formula ( ) (wherein: $R^1$, $R^2$, and $R^3$ are each H or organic independently; X is single coupling or coupling chain; and $R^4$, $R^5$, and $R^6$ is each H or organic

independently), univalent metal ion (B), and water.

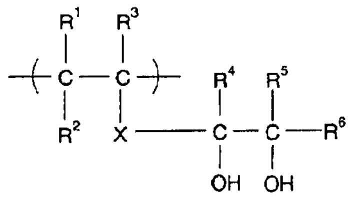

(1)

JP 2007-161795 A relates to a resin composition comprising a water soluble polyvinyl alcohol resin (A) having a 1,2-diol structural unit represented by general formula (1) and a water-swellable layered inorganic compound (B), wherein $R^1$, $R^2$, and $R^3$ each independently represent a hydrogen atom or an organic group; X represents a single bond or a chain link; and $R^4$, $R^5$, and $R^6$ each independently represent a hydrogen atom or an organic group.

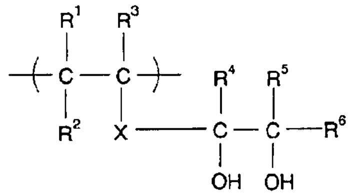

(1)

WO 2011/013604 A1 relates to a porous film for secondary batteries which comprises electrically non-conductive particles and a block polymer. Preferably, the block polymer is composed of a segment that is miscible with any electrolytic solution and a segment that is immiscible with any electrolytic solution.

PRIOR ART REFERENCES

Patent Documents

Patent document 1: Japanese Unexamined Patent Publication No. Sho 50-60733
Patent document 2: Japanese Unexamined Patent Publication No. Sho 57-126068
Patent document 3: Japanese Unexamined Patent Publication No. Hei
Patent document 4: Japanese Unexamined Patent Publication No. Hei 2-61246
Patent document 5: Japanese Unexamined Patent Publication No. Hei 7-134989
Patent document 6: Japanese Patent No. 3371301

SUMMARY OF THE INVENTION

Problems to be Solved by the Invention

An object of the present invention is to solve the problems accompanying the prior art in that the coating agent for battery electrode or battery separator, which is used for protecting the electrode or separator surface to improve the safety of the battery, or which is used as a layer to be impregnated with an electrolytic solution and serves as an ion source to improve the battery characteristics, does not have adhesion force to the electrode or separator required for improving the safety and does not have practically satisfactory ionic conduction properties, and cannot achieve high-rate charge/discharge cycle characteristics and causes large charge and discharge loss due to the high internal resistance.

Means to Solve the Problems

The present inventors have conducted studies with a view toward solving the above-mentioned problems accompanying the prior art. As a result, it has been found that poor adhesion of the coating agent to the separator or electrode surface causes the coating layer to be lifted or peeled off the battery electrode or battery separator during the charging/discharging operation, so that ions cannot continuously move, causing the coating layer for battery electrode or battery separator to have poor ionic conduction properties or making the coating layer difficult to exhibit satisfactory protection function when the battery suffers runaway heat generation or is crushed.
The present invention is as follows.

1. The use of a composition comprising a vinyl alcohol copolymer having a structural unit represented by the following general formula (1):

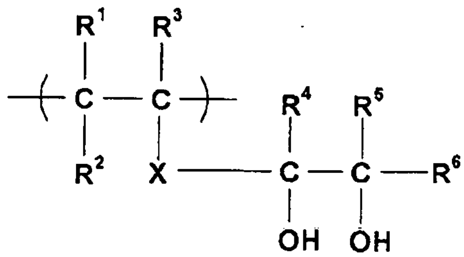

(1)

wherein each of $R^1$, $R^2$, and $R^3$ independently represents a hydrogen atom or an organic group, X represents a single bond or a bonding chain, and each of $R^4$, $R^5$, and $R^6$ independently represents a hydrogen atom or an organic group,
and an aqueous emulsion of a synthetic resin obtained by polymerizing a copolymerizable monomer having an acrylic monomer as a main component or an aqueous emulsion of a styrene thermoplastic elastomer, in a lithium-ion battery to battery electrode or battery separator with a protective coating;

2. The use according to item 1 above, wherein the aqueous emulsion exhibits an apparent graft ratio W, expressed by the formula

$$W = w2/w1 \times 100$$

wherein W represents % by weight
w1: represents the oven-dry weight in grams of a film before extraction, and
w2: represents the oven-dry weight in grams of a film after extraction as determined by the method defined in the specification of 60 to 90% by weight;

3. The use according to item 1 or 2 above, wherein the composition further comprises inorganic particles;
4. The use according to item 3 above, wherein the inorganic particles are metal oxide powders.
5. The use according to any one of items 1 to 4 above, wherein the composition further comprises a salt selected from lithium hydroxide, lithium silicate, lithium hexafluorophosphate, lithium tetrafluoroborate, lithium perchlorate, lithium bis(trifluoromethanesulfonyl)imide, lithium bis(pentafluoroethanesulfonyl)imide, lithium trifluoromethanesulfonate, sodium hydroxide, sodium perchlorate, calcium hydroxide, calcium perchlorate, magnesium perchlorate, tetraethylammonium tetrafluoroborate, triethylmethylammonium bis(trifluoromethanesulfonyl)imide, and tetraethylammonium bis(trifluoromethanesulfonyl)imide.

Effect of the Invention

The coating agent composition for battery electrode or battery separator for use according to the present invention comprises, as mentioned above, a vinyl alcohol copolymer, and an aqueous emulsion of a synthetic resin obtained by polymerizing a copolymerizable monomer having an acrylic monomer as a main component or an aqueous emulsion of a styrene thermoplastic elastomer, and therefore can be improved in the adhesion to a battery electrode or battery separator, and thus can exhibit satisfactory protection function when the battery suffers runaway heat generation

or is crushed. Specifically, by coating a battery electrode and/or a battery separator with the coating agent composition for battery electrode or battery separator for use according to the present invention, the following effects can be obtained.

The occurrence of internal short-circuiting due to the generation of dendrite, or the occurrence of short-circuiting between the positive and negative electrodes due to crush of the battery caused by an accident, mixing of conductive foreign matter, or fusion of the separator caused by, e.g., runaway heat generation is prevented, and a stress of expansion and shrinkage of the active material caused due to the charging/discharging operation is relaxed. Further, the coating layer of the coating agent composition serves as a layer retaining an electrolytic solution on the electrode or separator surface or as a desolvating layer for ions contained in the electrolytic solution to reduce the resistance to ionic conduction, so that even when the battery is charged and discharged in many cycles repeatedly for a long term, or the charged battery is allowed to stand at a high temperature, the deterioration of the battery characteristics can be prevented.

Further, the film formed from the coating agent composition for battery electrode or battery separator for use according to the present invention has excellent flexibility, and hence has excellent resistance to the expansion and shrinkage stress of the electrode caused due to bending or desorption of ions, and further has excellent ionic conduction properties. Specifically, in the present invention, the synthetic resin having high ionic conduction properties and/or high flexibility and the vinyl alcohol copolymer having high mechanical strength and high adhesion to an electrode and/or separator together form a phase separation structure and respectively exhibit high ionic conduction properties and high adhesion, and therefore a coating agent composition having excellent ability to relax a stress and low internal resistance as well as high adhesion properties can be provided.

BRIEF DESCRIPTION OF THE DRAWINGS

Fig. 1 is a cross-sectional view of a battery electrode coated with the coating agent composition for battery electrode or battery separator.
Fig. 2 is a cross-sectional view of a separator coated with the coating agent composition for battery electrode or battery separator.

MODE FOR CARRYING OUT THE INVENTION

[Vinyl alcohol copolymer]

The coating agent composition for battery electrode or battery separator for use according to the present invention comprises a vinyl alcohol copolymer having a structural unit represented by the following general formula (1):

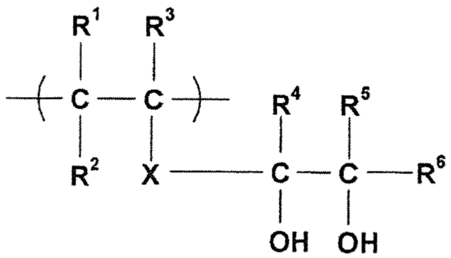

(1)

In the structural unit represented by the general formula (1), each of $R^1$ to $R^3$ and $R^4$ to $R^6$ is independently a hydrogen atom or an organic group, preferably each of them is a hydrogen atom. $R^1$ to $R^3$ and $R^4$ to $R^6$ may be substituted with an organic group as long as the properties of the copolymer are not considerably lowered. With respect to the organic group, there is no particular limitation, but preferred is an alkyl group having 1 to 4 carbon atoms, such as a methyl group, an ethyl group, a n-propyl group, an isopropyl group, a n-butyl group, an isobutyl group, or a tert-butyl group, and, if necessary, the above alkyl group may have a substituent, such as a halogen group, a hydroxyl group, an ester group, a carboxylic acid group, or a sulfonic acid group. The amount of $R^1$ to $R^3$ and $R^4$ to $R^6$ as an organic group(s) is preferably 0.01 to 80 mol%, especially preferably 0.1 to 50 mol%, based on the total mole of $R^1$ to $R^3$ and $R^4$ to $R^6$

Further, in the structural unit represented by the general formula (1), X is a single bond or a bonding chain, most preferably a single bond from the viewpoint of the thermal stability and the structural stability under high temperature/acidic conditions, but X may be a bonding chain in such an amount that the effects of the present invention are not sacrificed. With respect to the bonding chain, there is no particular limitation, but examples of the bonding chains include hydrocarbons, such as alkylene, alkenylene, or alkynylene having 1 to 18 carbon atoms, phenylene, and naphthylene (these hydrocarbons may be substituted with a halogen, such as fluorine, chlorine, or bromine), -O-, $-(CH_2O)_m-$, $-(OCH_2)_m-$, $-(CH_2O)_mCH_2-$, -CO-, -COCO-, $-CO(CH_2)_mCO-$, $-CO(C_6H_4)CO-$, -S-, -CS-, -SO-, $-SO_2-$, -NR-, -CONR-, -NRCO-, -CSNR-, -NRCS-, -NRNR-, $-HPO_4-$, $-Si(OR)_2-$, $-OSi(OR)_2-$, $-OSi(OR)_2O-$, $-Ti(OR)_2-$, $-OTi(OR)_2-$, $-OTi(OR)_2O-$, -Al(OR)-, -OAl(OR)-, and -OAl(OR)O- {wherein R each occurrence independently represents an arbitrary substituent, preferably a hydrogen atom, or an alkyl group (particularly an alkyl group having 1 to 4 carbon atoms), and m is a natural number, preferably 1 to 10}. Of these, from the viewpoint of achieving excellent stability during the production or use, preferred is an alkylene group having 6 carbon atoms or less, and especially preferred is a methylene group or $-CH_2OCH_2-$. The amount of X as a bonding chain is preferably 0.01 to 80 mol%, especially preferably 0.1 to 50 mol%, based on the mole of X.

The vinyl alcohol copolymer used in the present invention can be synthesized using the structural unit represented by the general formula (1) in an arbitrary amount based on the total mole of the structural units, and, from the viewpoint of the stability of a dispersoid in the aqueous emulsion and the adhesion of the composition to a battery electrode or battery separator, the amount of the structural unit represented by formula (1) is preferably 5 to 10 mol%.

The vinyl alcohol copolymer used in the present invention generally has a saponification value (as measured in accordance with JIS K6726) of 70 mol% or more, especially preferably 75 mol% or more.

The coating agent composition for battery electrode or battery separator for use according to the present invention preferably contains the vinyl alcohol copolymer having a structural unit represented by the general formula (1) in an amount of 0.1 to 90% by weight, further preferably 1 to 85% by weight, especially preferably 3 to 80% by weight.

With respect to the method for producing the vinyl alcohol copolymer used in the present invention, there is no particular limitation, but (i) a method in which a copolymer of vinyl ester monomer (A) and a compound represented by the following general formula (2):

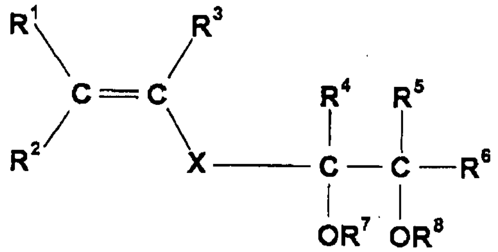

(2)

is subjected to saponification,

(ii) a method in which a copolymer of vinyl ester monomer (A) and a compound represented by the following general formula (3):

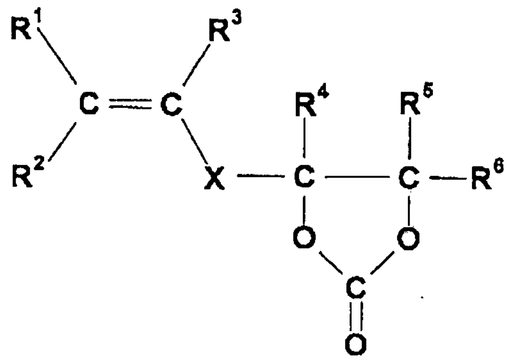

(3)

is subjected to saponification and decarboxylation, or

(iii) a method in which a copolymer of vinyl ester monomer (A) and a compound represented by the following general formula (4):

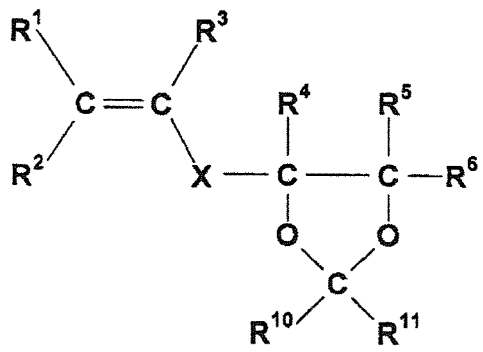

(4)

is subjected to saponification and deketalization is preferably used.

$R^1$, $R^2$, $R^3$, X, $R^4$, $R^5$, and $R^6$ in the general formulae (2), (3), and (4) above are the same as those in the general formula (1). Each of $R^7$ and $R^8$ is independently a hydrogen atom or $R^9$-CO- (wherein $R^9$ is an alkyl group, particularly an alkyl group having 1 to 4 carbon atoms). Each of $R^{10}$ and $R^{11}$ is independently a hydrogen atom or the above-mentioned organic group.

Especially, the vinyl alcohol copolymer obtained by (i') subjecting a copolymer of vinyl ester monomer (A) and a compound represented by the following general formula (2'):

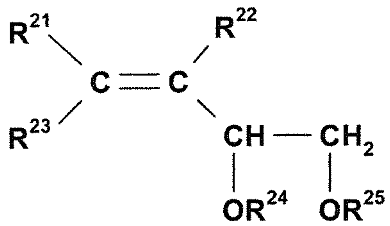

(2')

wherein each of $R^{21}$, $R^{22}$, and $R^{23}$ independently represents hydrogen or an alkyl group, preferably an alkyl group having 1 to 4 carbon atoms, and each of $R^{24}$ and $R^{25}$ independently represents a hydrogen atom or $R^{26}$-CO- (wherein $R^{26}$ is an alkyl group, particularly an alkyl group having 1 to 4 carbon atoms)
to saponification has, at a position far from the principal chain, a primary alcohol having a small pKa and small steric hindrance, differing from a conventional polyvinyl alcohol, and therefore exhibits high adhesion or reactivity due to a hydrogen bond or a dehydration condensation reaction, and hence advantageously remarkably improves the adhesion force of the coating agent to the electrode surface and separator surface.

Further, as preferred examples of the above-mentioned vinyl alcohol resin copolymers, there can be mentioned a vinyl alcohol copolymer obtained by (ii') subjecting copolymer (A-B) of vinyl ester monomer (A) and vinyl ethylene carbonate (B) represented by the following general formula (3'):

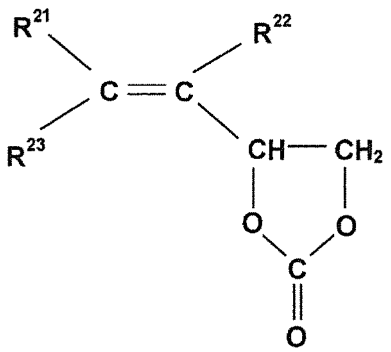

(3')

wherein each of $R^{21}$, $R^{22}$, and $R^{23}$ independently represents hydrogen or an alkyl group, preferably an alkyl group having 1 to 4 carbon atoms

to saponification and decarboxylation, and

a vinyl alcohol copolymer obtained by (iii') subjecting copolymer (A-C) of vinyl ester monomer (A) and 2,2-dialkyl-4-vinyl-1,3-dioxolane (C) represented by the following general formula (4'):

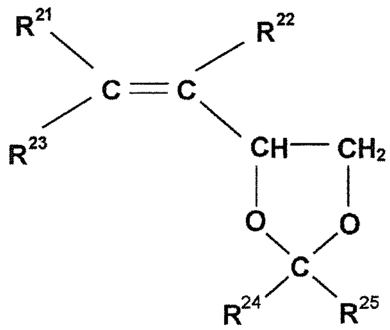

(4')

wherein each of $R^{21}$, $R^{22}$, $R^{23}$, $R^{24}$, and $R^{25}$ independently represents hydrogen or an alkyl group, preferably an alkyl group having 1 to 4 carbon atoms

to saponification and deketalization.

Examples of the vinyl ester monomers (A) include vinyl formate, vinyl acetate, vinyl propionate, vinyl valerate, vinyl butyrate, vinyl isobutyrate, vinyl pivalate, vinyl caprate, vinyl laurate, vinyl srearate, vinyl benzoate, and vinyl versatate, and, of these, from an economical point of view, vinyl acetate is preferably used.

Further, in the vinyl alcohol copolymer, in addition to the above-mentioned monomers {vinyl ester monomer (A) and the compound represented by the general formula (2), (3), or (4)}, as a copolymerizable component, an additional monomer (for example, $\alpha$-olefins, such as ethylene and propylene; hydroxyl group-containing $\alpha$-olefins, such as 3-buten-1-ol, 4-penten-1-ol, and 5-hexene-1,2-diol, and derivatives, such as acyl derivatives thereof; unsaturated acids, such as itaconic acid, maleic acid, and acrylic acid, and salts or mono- or dialkyl esters thereof; and compounds, e.g., nitriles, such as acrylonitrile, amides, such as methacrylamide and diacetoneacrylamide, olefin sulfonic acids, such as ethylenesulfonic acid, allylsulfonic acid, methallylsulfonic acid, and AMPS, and salts thereof) may be copolymerized in such an amount that the physical properties of the resin copolymer are not largely affected. The amount of the additional monomer is preferably 10 mol% or less, especially preferably 5 mol% or less, based on the total mole of the monomer components constituting the vinyl alcohol copolymer.

Further, the vinyl alcohol copolymer generally has an average degree of polymerization (as measured in accordance with JIS K6726) of 100 to 4,000, especially preferably 200 to 3,500, further preferably 250 to 3,000.

[Aqueous synthetic resin emulsion]

The coating agent composition for battery electrode or battery separator for use according to the present invention comprises the above-mentioned vinyl alcohol copolymer and an aqueous emulsion of a synthetic resin obtained by polymerizing a copolymerizable monomer having an acrylic monomer as a main component. In the present invention, the term "main component" means a component constituting 50 mol% or more of the copolymerizable monomer.

With respect to the aqueous emulsion used in the present invention, which is an aqueous emulsion of a synthetic resin obtained by polymerizing a copolymerizable monomer having an acrylic monomer as a main component, it is preferred that the synthetic resin in the emulsion is dispersed and stabilized by the above-mentioned vinyl alcohol copolymer. With respect to the method for producing the aqueous emulsion, there is no particular limitation as long as it is a known method as a method for producing an aqueous emulsion using a vinyl alcohol resin as a dispersant, and an emulsion polymerization method using a vinyl alcohol resin as an emulsifying agent, which is the most commonly used, is described below.

In the aqueous emulsion produced by an emulsion polymerization method, with respect to the synthetic resin as a dispersoid, a known synthetic resin obtained by polymerizing a copolymerizable monomer having an acrylic monomer as a main component can be used.

With respect to the acrylic monomer, there is no particular limitation as long as it is known to persons skilled in the art, and examples of the acrylic monomers include aliphatic (meth)acrylates, such as methyl (meth)acrylate, ethyl (meth)acrylate, n-butyl (meth)acrylate, i-butyl (meth)acrylate, t-butyl (meth)acrylate, 2-ethylhexyl (meth)acrylate, cyclohexyl (meth)acrylate, lauryl (meth)acrylate, octyl (meth)acrylate, and stearyl (meth)acrylate; aromatic (meth)acrylates, such as phenoxy (meth)acrylate; and trifluoroethyl (meth)acrylate, and these can be used individually or in combination. Of these, preferred are aliphatic (meth)acrylates having an alkyl group having 1 to 18 carbon atoms, preferably 1 to 10 carbon atoms, further preferably 1 to 8 carbon atoms.

In the present invention, the term "(meth)acrylate" means acrylate or methacrylate, and the term "(meth)acrylic" means acrylic or methacrylic.

Of the above acrylic monomers, from the viewpoint of the easy copolymerizability and the adhesion to, e.g., a battery electrode, especially preferred is a combination of methyl methacrylate, of which homopolymer has a high glass transition temperature, and at least one of n-butyl acrylate and 2-ethylhexyl acrylate, of which homopolymer has a low glass transition temperature.

Further, in the present invention, it is preferred that the acrylic monomer as well as an acetoacetyl group-containing monomer are copolymerized in the emulsion polymerization from the viewpoint of obtaining excellent adhesion to a battery electrode or battery separator.

Specific examples of the above-mentioned acetoacetyl group-containing monomers include vinyl acetoacetate, allyl acetoacetate, allyl diacetoacetate, acetoacetoxyalkyl (meth)acrylates, such as acetoacetoxyethyl (meth)acrylate, and acetoacetoxypropyl (meth)acrylate; acetoacetoxyalkyl crotonates, such as acetoacetoxyethyl crotonate and acetoacetoxypropyl crotonate; and 2-cyanoacetoacetoxyethyl (meth)acrylate.

The amount of the acetoacetyl group-containing monomer used is preferably 0.01 to 10% by weight, more preferably 0.05 to 5% by weight, especially preferably 0.1 to 5% by weight, further preferably 0.1 to 1% by weight, based on the total weight of the copolymerizable monomers. When the amount of the above monomer used is too small, the effect of adhesion to, e.g., a battery electrode is likely to be unsatisfactory, and, when the amount of the above monomer used is too large, a polymerization failure is likely to occur.

These acetoacetyl group-containing monomers can be used individually or in combination.

Further, in the present invention, a copolymerizable monomer other than those mentioned above can be used in such an amount that the effects aimed at by the present invention are not sacrificed, and examples of such copolymerizable monomers include styrene monomers, such as styrene and $\alpha$-methylstyrene; vinyl monomers, e.g., vinyl carboxylates, such as vinyl acetate, vinyl propionate, vinyl laurate, and vinyl versatate, and alkyl vinyl ethers, such as methyl vinyl ether; olefin monomers, e.g., olefins, such as ethylene, propylene, 1-butene, and isobutene, olefin halides, such as vinyl chloride, vinylidene chloride, vinyl fluoride, and vinylidene fluoride, and ethylenesulfonic acid; and diene monomers, such as butadiene-1,3, 2-methylbutadiene, 1,3- or 2,3-dimethylbutadiene-1,3, and 2-chlorobutadiene-1,3.

Further, as other usable copolymerizable monomers, nitrile monomers, such as (meth)acrylonitrile; acrylic monomers modified with an amide or modified with a carboxyl group, e.g., (meth)acrylic acid, such as (meth)acrylamide, N,N-dimethylacrylamide, t-butylacrylamide, 2-acrylamido-2-methylpropanesulfonic acid, and diacetoneacrylamide; and unsaturated dicarboxylic acid or ester thereof monomers, such as itaconic acid (anhydride), maleic acid (anhydride), and esters thereof, can be used.

In the aqueous synthetic resin emulsion used in the present invention, in addition to the above-mentioned copolymerizable monomers including an acrylic monomer and an acetoacetyl group-containing monomer and the copolymerizable monomer usable in combination with the above monomer, if necessary, an additional component can be further used. With respect to the additional component, there is no particular limitation as long as it does not lower the properties of the aqueous synthetic resin emulsion, and the additional component can be appropriately selected according to the object. As examples of the additional components, there can be mentioned a polymerization initiator, a polymerization regulator, an auxiliary emulsifying agent, a plasticizer, and a film forming auxiliary.

With respect to the polymerization initiator, there is no particular limitation as long as it can be used in general emulsion polymerization, and examples of polymerization initiators include inorganic peroxides, such as potassium persulfate, sodium persulfate, and ammonium persulfate; peroxides, such as organic peroxides, azo initiators, hydrogen peroxide, and butyl peroxide; and redox polymerization initiators comprising a combination of the above compound and a reducing agent, such as acid sodium sulfite or L-ascorbic acid. These can be used individually or in combination. Of these, ammonium persulfate and potassium persulfate are preferred because polymerization can be easily performed without adversely affecting the physical properties of the film or the improvement of strength.

With respect to the polymerization regulator, there is no particular limitation, and it can be appropriately selected from known regulators. As examples of the polymerization regulators, there can be mentioned a chain transfer agent and a buffer.

Examples of chain transfer agents include alcohols, such as methanol, ethanol, propanol, and butanol; aldehydes, such as acetoaldehyde, propionaldehyde, n-butylaldehyde, furfural, and benzaldehyde; and mercaptans, such as dodecylmercaptan, laurylmercaptan, normalmercaptan, thioglycolic acid, octyl thioglycolate, and thioglycerol. These can be used individually or in combination. The use of a chain transfer agent is effective in stabilizing the polymerization. However, the chain transfer agent reduces the degree of polymerization of the synthetic resin produced, and therefore a film formed from the resultant resin is likely to be reduced in the resistance to electrolytic solution, and the resultant coating agent is likely to have physical properties having large variability, and further is likely to be lowered in adhesion force. For this reason, when a chain transfer agent is used, it is desired that the amount of the chain transfer agent used is as small as possible.

Examples of the buffers include sodium acetate, ammonium acetate, sodium secondary phosphate, and sodium

citrate. These can be used individually or in combination.

With respect to the auxiliary emulsifying agent, there can be used any agents known to persons skilled in the art as usable in emulsion polymerization. Therefore, the auxiliary emulsifying agent can be appropriately selected from, for example, known anionic, cationic, and nonionic surfactants and known water-soluble polymers and water-soluble oligomers having the protective colloidal ability other than the vinyl alcohol copolymer.

Specific preferred examples of surfactants include anionic surfactants, such as sodium laurylsulfate and sodium dodecylbenzenesulfonate, and nonionic surfactants having a Pluronic structure or a polyoxyethylene structure. Alternatively, as a surfactant, a reactive surfactant having a radically polymerizable unsaturated bond in the structure can be used. These can be used individually or in combination.

The used of a surfactant causes the emulsion polymerization to smoothly proceed, and makes it easy to control the polymerization (effect of an emulsifying agent). In addition, the surfactant has an effect of suppressing the generation of coarse particles or materials in a block form during the polymerization.

When a surfactant is used as an emulsifying agent in a large amount, the apparent graft ratio tends to be reduced. For this reason, when a surfactant is used, it is desired that the amount of the surfactant used is supplemental for the vinyl alcohol copolymer, namely, the amount of the surfactant is as small as possible.

Further, as a water-soluble polymer having the protective colloidal ability, for example, a PVA resin other than the above-mentioned vinyl alcohol copolymer, hydroxyethyl cellulose, polyvinylpyrrolidone, or methyl cellulose can be used. These can be used individually or in combination. These are effective in increasing the emulsion in viscosity or changing the particle diameter of the emulsion to change the viscosity. A film formed from the composition using the water-soluble polymer may be lowered in the resistance to electrolytic solution depending on the amount of the water-soluble polymer used in the composition. Therefore, when the water-soluble polymer is used, it is desired that the amount of the polymer used is small.

As preferred examples of water-soluble oligomers, there can be mentioned polymers or copolymers having a hydrophilic group, such as a sulfonic acid group, a carboxyl group, a hydroxyl group, or an alkylene glycol group, and having a degree of polymerization of about 10 to 500. Specific examples of water-soluble oligomers include amide copolymers, such as a 2-methacrylamide-2-methylpropanesulfonic acid copolymer, a sodium methacrylate-4-styrenesulfonate copolymer, a styrene/maleic acid copolymer, a melamine sulfonic acid formaldehyde condensation product, and poly(meth)acrylates. Further, specific examples include water-soluble oligomers obtained by preliminarily homopolymirizing a monomer having a sulfonic acid group, a carboxyl group, a hydroxyl group, or an alkylene glycol group, or a radically polymerizable reactive emulsifying agent, or copolymerizing the above monomer or emulsifying agent with another monomer. These can be used individually or in combination. In the present invention, of these, from the viewpoint of obtaining stable miscibility with the inorganic particles, preferred are a 2-methacrylamide-2-methylpropanesulfonic acid copolymer and a sodium methacrylate-4-styrenesulfonate copolymer.

As a plasticizer, e.g., an adipate plasticizer, a phthalic acid plasticizer, or a phosphoric acid plasticizer can be used. Further, a film forming auxiliary having a boiling point of 260°C or higher can be used.

With respect to the amount of the above-mentioned additional component used, there is no particular limitation as long as the effects aimed at by the present invention are not sacrificed, and the amount can be appropriately selected according to the object.

Next, the production of the aqueous synthetic resin emulsion is described below.

As mentioned above, the aqueous synthetic resin emulsion used in the present invention can be produced by, using a specific vinyl alcohol copolymer as a protective colloidal agent, subjecting a copolymerizable monomer comprising an acrylic monomer and, if necessary, a specific functional group-containing monomer to emulsion polymerization.

With respect to the method for emulsion polymerization, there is no particular limitation, and, as examples of the emulsion polymerization methods, there can be mentioned a monomer dropping emulsion polymerization method in which water and the vinyl alcohol copolymer are charged into a reaction vessel, and the temperature of the resultant mixture is increased and a copolymerizable monomer and a polymerization initiator are dropwise added to the mixture; and an emulsified monomer dropping emulsion polymerization method in which a monomer to be added is preliminarily dispersed or emulsified in the vinyl alcohol copolymer and water, followed by dropping of the resultant monomer emulsion, and, from the viewpoint of the control properties for the polymerization process, a monomer dropping emulsion polymerization method is convenient.

Generally, the emulsion polymerization is conducted using, if necessary, the above-mentioned additional component, e.g., a polymerization initiator, a polymerization regulator, or an auxiliary emulsifying agent in addition to the vinyl alcohol copolymer and the above-mentioned copolymerizable monomer component. With respect to the reaction conditions for polymerization, there is no particular limitation, and the reaction conditions can be appropriately selected according to, e.g., the type of the copolymerizable monomer used and the object.

The emulsion polymerization process is described below in detail.

First, into a reaction vessel are charged water, the vinyl alcohol copolymer, and, if necessary, an auxiliary emulsifying agent, and the temperature of the resultant mixture is increased (generally to 65 to 90°C), and then a part

of the copolymerizable monomer component and a polymerization initiator are added to the reaction vessel to perform an initial polymerization. Then, the remaining copolymerizable monomer component is added at once or dropwise to the reaction vessel and, if necessary, a polymerization initiator is further added to advance the polymerization. After confirming the completion of the polymerization reaction, the reaction vessel is cooled, and a desired aqueous synthetic resin emulsion can be removed from the reaction vessel.

In the present invention, the aqueous synthetic resin emulsion obtained by emulsion polymerization typically has a uniform milky white color, and the synthetic resin in the aqueous synthetic resin emulsion preferably has an average particle diameter of 0.2 to 2 μm, more preferably 0.3 to 1.5 μm.

In the present invention, an average particle diameter can be measured by a method commonly used, for example, by a laser analysis/scattering-type particle size distribution measuring apparatus, "LA-910" (manufactured by Horiba, Ltd.).

With respect to the glass transition temperature of the synthetic resin in the aqueous synthetic resin emulsion, there is no particular limitation, but the glass transition temperature of the synthetic resin is preferably -20 to +30°C, especially preferably -15 to +20°C. When the glass transition temperature of the synthetic resin is too low, the resultant coating agent composition is likely to be lowered in adhesion properties.

In the present invention, the glass transition temperature of the synthetic resin means a value determined by a Fox's equation based on the principal monomer component, excluding the functional group-containing monomer as a copolymerizable monomer component.

Further, in the present invention, it is preferred that at least a part of the vinyl alcohol copolymer is apparent-grafting on the above-mentioned synthetic resin from the viewpoint of achieving storage stability of the resultant aqueous synthetic resin emulsion per se before being dried and reducing the dispersion of values of measurement of the adhesion force.

When the vinyl alcohol copolymer is apparent-grafting on the above-mentioned synthetic resin, a value (W) represented by the formula (1) below is preferably 60 to 90% by weight, more preferably 65 to 85% by weight. This value can be used as a yardstick for the apparent graft ratio, and, when this value is too low, it is likely that the apparent graft ratio is low, so that the protective colloidal action during the emulsion polymerization becomes poor, causing the polymerization stability to be poor.

A value (W) of the formula (1) is determined as follows.

Specifically, for example, an emulsion to be tested is dried at 40°C for 16 hours to prepare a film having a thickness of about 0.5 mm, and the prepared film is allowed to stand at 23°C at 65 %RH for 2 days. The resultant film is subjected to extraction in boiling water for 8 hours, and then subjected to extraction in acetone for 8 hours to remove the resin which has not apparent-grafted and others. The oven-dry weight of the film before extraction is taken as w1 (g) and the oven-dry weight of the film after extraction is taken as w2 (g), and a value (W) is determined from the following formula.

$$W\ (\%\ \text{by weight}) = (w2)/(w1) \times 100 \qquad (1)$$

w1: Oven-dry weight (g) of the film before extraction
w2: Oven-dry weight (g) of the film after extraction

The oven-dry weight (w1) of the film before extraction is obtained by preliminarily drying a sample different from the extraction test sample at 105°C for one hour to determine an oven-dry weight of the film of the sample before extraction, and the oven-dry weight (w2) of the film after extraction is obtained by drying the sample obtained after extraction at 105°C for one hour to determine a weight of the resultant film. The weights w1 and w2 are determined using different samples, and therefore correction is made using the volatile contents of the respective samples lost on drying to determine oven-dry weights of the films of the respective samples presumed to be treated under the same conditions.

As examples of methods for controlling the value (W) of the formula (1) above to be in the above range, there can be mentioned a method in which the temperature for the emulsion polymerization is increased to be slightly higher than the temperature conventionally employed, and a method in which a persulfate as a polymerization catalyst and an extremely small amount of a reducing agent (e.g., acid sodium sulfite) are used in combination.

With respect to the aqueous emulsion used in the present invention, the aqueous synthetic resin emulsion obtained by the above-mentioned method is most preferred. Alternatively, an aqueous emulsion having a styrene thermoplastic elastomer as a dispersoid is also effective for the object of the present invention.

Hereinbelow, the aqueous emulsion having a styrene thermoplastic elastomer as a dispersoid and, as an example of a method for producing the same, a method for producing an aqueous emulsion from a resin composition

obtained by melt-kneading together the styrene thermoplastic elastomer and the above-mentioned vinyl alcohol copolymer will be described.

[Styrene thermoplastic elastomer]

The styrene thermoplastic elastomer used in the present invention is first described.

The elastomer used in the present invention has, as a hard segment, a polymer block of an aromatic vinyl compound, such as styrene, representatively, and, as a soft segment, a polymer block of a conjugated diene compound, a block obtained by hydrogenating part of or all of the double bonds remaining in the above conjugated diene polymer block, or a polymer block of isobutylene.

Particularly, in the present invention, the elastomer having on the side chain a carboxylic acid group or a group of a derivative thereof is preferably used.

With respect to the configuration of each block in the elastomer, when the hard segment is indicated by X and the soft segment is indicated by Y, examples of block configurations include a diblock copolymer represented by X-Y, a triblock copolymer represented by X-Y-X or Y-X-Y, and a polyblock copolymer in which X and Y are alternately connected to each other, and examples of their structures include linear, branched, and star-like structures. Of these, from the viewpoint of the mechanical properties, a linear triblock copolymer represented by X-Y-X is preferred.

Examples of monomers used for forming the polymer block of an aromatic vinyl compound as a hard segment include styrene; alkylstyrenes, such as $\alpha$-methylstyrene, $\beta$-methylstyrene, o-methylstyrene, m-methylstyrene, p-methylstyrene, t-butylstyrene, 2,4-dimethylstyrene, and 2,4,6-trimethylstyrene; halogenated styrenes, such as monofluorostyrene, difluorostyrene, monochlorostyrene, dichlorostyrene, and methoxystyrene; and vinyl compounds having an aromatic ring other than the benzene ring, such as vinylnaphthalene, vinylanthracene, indene, and acetonaphthylene, and derivatives thereof. The polymer block of an aromatic vinyl compound may be either a homopolymer block of the above-mentioned monomer or a copolymer block of a plurality of the monomers, but a homopolymer block of styrene is preferably used.

The polymer block of an aromatic vinyl compound may have copolymerized thereon a monomer other than the aromatic vinyl compound in a small amount such that the effects of the present invention are not sacrificed, and examples of such monomers include olefins, such as butene, pentene, and hexene, diene compounds, such as butadiene and isoprene, vinyl ether compounds, such as methyl vinyl ether, and allyl ether compounds, and the copolymerization ratio of such a monomer is generally 10 mol% or less, based on the mole of the polymer block.

Examples of monomers used for forming the polymer block as a soft segment include conjugated diene compounds, such as 1,3-butadiene, isoprene (2-methyl-1,3-butadiene), 2,3-dimethyl-1,3-butadiene, and 1,3-pentadiene, and isobutylene, and these can be used individually or in combination. Of these, preferred are homopolymer blocks and copolymer blocks of isoprene, butadiene, and isobutylene, and a homopolymer block of butadiene or isobutylene is especially preferably used.

The polymer block of a conjugated diene compound may have a plurality of bond forms depending on the polymerization. For example, in butadiene, a butadiene unit having a 1,2-bond ($-CH_2-CH(CH=CH_2)-$) and a butadiene unit having a 1,4-bond ($-CH_2-CH=CH-CH_2-$) are formed. The ratio between these units varies depending on the type of the conjugated diene compound and hence is not always constant, but, in the case of butadiene, the 1,2-bond formation ratio is generally in the range of from 20 to 80 mol%.

By hydrogenating part of or all of the double bonds remaining in the polymer block of a conjugated diene compound, it is possible to improve the styrene thermoplastic elastomer in heat resistance and weather resistance. In this case, the hydrogenation ratio is preferably 50 mol% or more, especially preferably 70 mol% or more.

For example, in butadiene, the hydrogenation changes the butadiene unit having a 1,2-bond to a butylene unit ($-CH_2-CH(CH_2-CH_3)-$) and changes the butadiene unit having a 1,4-bond to two continuous ethylene units ($-CH_2-CH_2-CH_2-CH_2-$), and, generally, the former is preferentially formed.

The polymer block as a soft segment may have copolymerized thereon a monomer other than the above-mentioned monomer in a small amount such that the effects of the present invention are not sacrificed, and examples of such monomers include aromatic vinyl compounds, such as styrene, olefins, such as butene, pentene, and hexene, vinyl ether compounds, such as methyl vinyl ether, and allyl ether compounds, and the copolymerization ratio of such a monomer is generally 10 mol% or less, based on the mole of the polymer block.

As mentioned above, the elastomer used in the present invention comprises, as a hard segment, a polymer block of an aromatic vinyl compound and, as a soft segment, a polymer block of a conjugated diene compound, a polymer block obtained by hydrogenating part of or all of the double bonds remaining in the above conjugated diene block, or a polymer block of isobutylene. Representative examples of the elastomers include a styrene/butadiene block copolymer (SBS) formed from styrene and butadiene as raw materials, a styrene/butadiene/butylene block copolymer (SBBS) obtained by hydrogenating a side chain double bond in the butadiene structural unit of SBS, a styrene/ethylene/butylene block copolymer (SEBS) obtained by further hydrogenating a principal chain double bond in the butadiene structural

unit of SBS, a styrene/isoprene block copolymer (SIPS) formed from styrene and isoprene as raw materials, and a styrene/isobutylene block copolymer (SIBS) formed from styrene and isobutylene as raw materials. Of these, SEBS or SIBS having excellent thermal stability and excellent weather resistance is preferably used.

The ratio of the polymer block of an aromatic vinyl compound as a hard segment to the polymer block as a soft segment contained in the elastomer, in terms of a weight ratio, is generally in the range of from 10/90 to 70/30, especially preferably 20/80 to 50/50. When the ratio of the polymer block of an aromatic vinyl compound contained in the elastomer is too large or too small, the resultant elastomer is likely to have a poor balance between the flexibility and rubber elasticity, so that a dried film or the like obtained from the latex in the present invention has unsatisfactory properties.

The elastomer can be obtained by forming a block copolymer having a polymer block of an aromatic vinyl compound and a polymer block of a conjugated diene compound or isobutylene and further, if necessary, hydrogenating the double bonds in the polymer block of the conjugated diene compound.

First, as a method for producing a block copolymer having a polymer block of an aromatic vinyl compound and a polymer block of a conjugated diene compound or isobutylene, a known method can be used, and, as an example, there can be mentioned a method in which, for example, using an alkyllithium compound as an initiator, an aromatic vinyl compound and a conjugated diene compound or isobutylene are successively polymerized in an inert organic solvent.

Next, as a method for hydrogenating the block copolymer having a polymer block of an aromatic vinyl compound and a polymer block of a conjugated diene compound, a known method can be used, and, as examples, there can be mentioned a method using a reducing agent, such as a boron hydride compound, and hydrogen reduction using a metal catalyst, such as platinum, palladium, or Raney nickel.

The elastomer used in the present invention preferably has a carboxylic acid group or a group of a derivative thereof on the side chain thereof, and, by using such a styrene thermoplastic elastomer having a carboxylic acid (derivative) group, a latex having especially excellent stability can be obtained.

The content of the carboxylic acid (derivative) groups in the elastomer, in terms of an acid value as measured by a titration method, is generally 0.5 to 20 mg $CH_3ONa$/g, especially preferably 1 to 10 mg $CH_3ONa$/g, further preferably 2 to 5 mg $CH_3ONa$/g.

When the acid value is too low, a satisfactory effect of the introduction of a carboxylic acid (derivative) group cannot be obtained. On the other hand, when the acid value is too high, a gel may be generated when melt-kneading the elastomer with the PVA resin (B).

As a method for introducing a carboxylic acid group or a group of a derivative thereof into the elastomer, a known method can be used, and, for example, a method in which an α,β-unsaturated carboxylic acid or a derivative thereof is copolymerized with the elastomer being produced, namely, being copolymerized, or a method in which an α,β-unsaturated carboxylic acid or a derivative thereof is added to the elastomer after produced is preferably used. Examples of methods for adding an α,β-unsaturated carboxylic acid or a derivative thereof to the elastomer include a method in which a radical reaction is performed in a solution in the presence or absence of a radical initiator, and a method in which melt kneading is performed in an extruder.

Examples of α,β-unsaturated carboxylic acids or derivatives thereof used in the introduction of a carboxyl group include α,β-unsaturated monocarboxylic acids, such as acrylic acid and methacrylic acid; α,β-unsaturated dicarboxylic acids, such as maleic acid, succinic acid, itaconic acid, and phthalic acid; α,β-unsaturated monocarboxylates, such as glycidyl acrylate, glycidyl methacrylate, hydroxyethyl acrylate, and hydroxymethyl methacrylate; and α,β-unsaturated dicarboxylic anhydrides, such as maleic anhydride, succinic anhydride, itaconic anhydride, and phthalic anhydride.

The elastomer used in the present invention generally has a weight average molecular weight of 50,000 to 500,000, especially preferably 120,000 to 450,000, further preferably 150,000 to 400,000.

Further, the elastomer generally has a melt viscosity of 100 to 3,000 mPa·s at 220°C and a shear rate of 122 $sec^{-1}$, especially preferably 300 to 2,000 mPa·s, further preferably 800 to 1,500 mPa·s.

When the weight average molecular weight of the elastomer is too large or the melt viscosity of the elastomer is too high, the operation properties for melt-kneading the elastomer with the vinyl alcohol copolymer or the dispersibility of the elastomer in the vinyl alcohol copolymer is likely to become poor. Conversely, when the weight average molecular weight is too small or the melt viscosity is too low, a dried film obtained from the coating agent for use according to the present invention is likely to have unsatisfactory mechanical strength.

The weight average molecular weight of the elastomer is a value as determined using GPC and using polystyrene as standard.

Further, in the present invention, with respect to the above-mentioned elastomer, one type of the elastomer may be used, or two or more types of the elastomers can be used in combination in order to obtain desired properties. In such a case, an elastomer having a carboxylic acid (derivative) group and an elastomer having no carboxylic acid (derivative) group may be used in combination.

Examples of commercially available products of the styrene thermoplastic elastomer having a carboxylic acid (derivative) group include "Tuftec M series" which is a carboxyl group-modified SBS, manufactured by Asahi Kasei

Corporation; "f-DYNARON", manufactured by JSR Corporation; and "Kraton FG", manufactured by Shell in Japan.

Examples of commercially available products of the styrene thermoplastic elastomer having no carboxylic acid (derivative) group include "Tufprene", "Asaprene T", and "Asaflex" which are SBS, manufactured by Asahi Kasei Corporation; "Tuftec P series" which is SBBS, manufactured by Asahi Kasei Corporation; and "Tuftec H series" which is SEBS, manufactured by Asahi Kasei Corporation.

Examples of other commercially available products include "Kraton G", "Kraton D", "Cariflex TR", manufactured by Shell in Japan; "SEPTON", "HYBRAR", manufactured by Kuraray Co., Ltd.; "DYNARON", "JSR-TR", "JSR-SIS", manufactured by JSR Corporation; "Quintac", manufactured by Zeon Corporation; and "DENKA STR", manufactured by Denki Kagaku Kogyo Kabushiki Kaisha.

[Aqueous emulsion of the styrene thermoplastic elastomer]

Next, an aqueous emulsion of the styrene thermoplastic elastomer is described below.

The aqueous emulsion is obtained by melt-kneading the above-mentioned styrene thermoplastic elastomer and vinyl alcohol copolymer, and dissolving the vinyl alcohol polymer in the resultant melt-kneaded mixture in water so that the elastomer is dispersed in the water.

In the production of the aqueous emulsion of the elastomer used in the present invention, the elastomer/vinyl alcohol copolymer weight ratio is generally in the range of from 10/90 to 40/60, especially preferably in the range of from 15/80 to 30/70.

A step for melt-kneading together the styrene thermoplastic elastomer and vinyl alcohol copolymer is first described below.

The elastomer and vinyl alcohol copolymer can be melt-kneaded using a known kneading apparatus, such as a kneader-ruder, an extruder, a mixing roll, a Banbury mixer, or a blast mill, and, of these, a method using an extruder is preferred from a commercial point of view.

Examples of extruders include a single-screw extruder and a twin-screw extruder, and, of these, more preferred is a twin-screw extruder in which the screws rotate in the same direction because satisfactory kneading is achieved at an appropriate shear rate. The extruder generally has an L/D of 10 to 80, especially preferably 15 to 70, further preferably 15 to 60. When the L/D is too small, melt-kneading is likely to be unsatisfactory, so that the dispersibility of the elastomer in the melt-kneaded mixture is unsatisfactory. Conversely, when the L/D is too large, it is likely that an excess shear rate is applied to the mixture to cause disadvantageous heat generation due to shearing.

The number of revolutions of the extruder screw is generally in the range of from 10 to 400 rpm, especially preferably 30 to 300 rpm, further preferably 50 to 250 rpm. When the number of revolutions is too small, the extrusion tends to be unstable. On the other hand, when the number of revolutions is too large, disadvantageous heat generation due to shearing is likely to cause the resin to deteriorate.

The resin temperature in the extruder is generally in the range of from 80 to 260°C, especially preferably 130 to 240°C, further preferably 180 to 230°C. When the resin temperature is too high, the vinyl alcohol copolymer or elastomer may suffer heat decomposition. Conversely, when the resin temperature is too low, melt-kneading is likely to be unsatisfactory, so that the dispersibility of the elastomer in the melt-kneaded mixture is unsatisfactory.

With respect to the method for controlling the resin temperature, there is no particular limitation, and, generally, a method of appropriately selecting the cylinder temperature in the extruder and the number of revolutions is used.

The melt-kneaded mixture extruded from the extruder is generally preferably pelletized from the viewpoint of the transfer to the subsequent step and the handling with ease, and the method for pelletization is not particularly limited, but a method is used in which the resin composition is extruded from a dice into a strand form and cooled, followed by cutting into an appropriate length. With respect to the method for cooling the resin, there is no particular limitation, but a method of contacting the extruded resin with a liquid maintained at a temperature lower than the temperature of the extruded resin, or a method of blowing cooling air against the extruded resin is preferably used, and the liquid for cooling must be an organic solvent which does not dissolve the vinyl alcohol copolymer, and examples of the liquids include alcohol solvents, and an air cooling method is preferably used from the viewpoint of the environment.

The shape of the pellets is generally cylindrical, and the size of the pellets is preferably smaller, taking into consideration the removal of the vinyl alcohol copolymer by contacting the pellets with water in the subsequent process to dissolve it, and, for example, the bore diameter of the dice is preferably 2 to 6 mmϕ and the length of the cut strand is preferably about 1 to 6 mm. Alternatively, a method can be used in which the kneaded mixture extruded from the extruder, which is still in the molten state, is cut in air or in an organic solvent. In this method, almost spherical pellets are obtained, and, with respect to the size of such pellets, pellets having a diameter in the range of from 2 to 5 mmϕ are preferably used.

Next, a step for producing the aqueous emulsion used in the present invention from the melt-kneaded mixture of the styrene thermoplastic elastomer and vinyl alcohol copolymer obtained in the above-mentioned step is described below.

This step is for dissolving the vinyl alcohol copolymer contained in the obtained melt-kneaded mixture, and, with respect to the method for the step, there is no particular limitation. Generally, pellets of the melt-kneaded mixture obtained by the above-mentioned method are added to water or N-methylpyrrolidone (NMP) and, if necessary, stirred and heated to obtain an aqueous emulsion or NMP emulsion, and an aqueous emulsion is preferred because it has a high degree of freedom, for example, the aqueous emulsion can be increased in concentration.
The aqueous emulsion of the styrene thermoplastic elastomer obtained by the above method generally has a solids content in the range of from 10 to 50% by weight, especially preferably 10 to 40% by weight.
The particle diameter of the styrene thermoplastic elastomer in the aqueous emulsion obtained by the above method is generally 50 to 2,000 nm, especially preferably 100 to 1,000 nm, further preferably 150 to 800 nm.
The coating agent composition for battery electrode or battery separator for use according to the present invention preferably contains the aqueous synthetic resin emulsion or aqueous elastomer emulsion in an amount of 0.1 to 99% by weight, further preferably 1 to 50% by weight, especially preferably 3 to 30% by weight.
In the coating agent composition for use according to the present invention, the synthetic resin or thermoplastic elastomer having high ionic conduction properties and/or high flexibility and the vinyl alcohol copolymer having high mechanical strength and high adhesion to an electrode and/or separator together form a phase separation structure and respectively exhibit high ionic conduction properties and high adhesion, and therefore there can be provided a coating agent composition having excellent ability to relax a stress and low internal resistance as well as high adhesion properties.

[Curing agent]

The coating agent composition for battery electrode or battery separator for use according to the present invention can further comprise a curing agent capable of reacting with the active hydrogen group in the vinyl alcohol copolymer. As the curing agent, an acid, such as polycarboxylic acid or polysulfonic acid, can be used, and specific examples of curing agents include citric acid, butanetetracarboxylic acid, 3,3',4,4'-biphenyltetracarboxylic acid, hexahydrophthalic acid, 1,3,3 a,4,5,9b-hexahydro-5(tetrahydro-2,5-dioxo-3-furanyl)naphtho[1,2-c]furan-1,3-dione (acid anhydride), glycerol bisanhydrotrimellitate monoacetate (acid anhydride), 3,3',4,4'-diphenyl sulfone tetracarboxylic acid, ethylene glycol bisanhydrotrimellitate (acid anhydride), 3,3',4,4'-diphenyl sulfone tetracarboxylic acid, ethylene glycol bisanhydrotrimellitate, methyl bicyclo[2.2.1]heptane-2,3-dicarboxylate, bicyclo[2.2.1]heptane-2,3-dicarboxylic acid, aspartic acid, pyromellitic acid, mellitic acid, a phosphate group-containing tetracarboxylic acid, phenylethynyl phthalate, and oxydiphthalic acid. Of these, an aromatic carboxylic acid is preferred from the viewpoint of the reactivity, and one which is substituted with 3 or more carboxylic acids per molecule is preferred from the viewpoint of the reactivity and crosslink density. Further, the anhydride of the above-mentioned polycarboxylic acid can be used. Further, a known acid, metal alkoxide, or metal chelate can be used as a curing agent, and examples of curing agent compounds capable of crosslinking a hydrogen-bonding functional group include boric acid, copper sulfate, chromium trifluoride, titanium tetraisopropoxide, titanium tetra-normal-butoxide, titanium butoxide dimer, titanium tetra-2-ethylhexoxide, titanium diisopropoxide bis(acetylacetonate), titanium tetraacetylacetonate, titanium dioctyloxide bis(octyleneglycolate), titanium diisopropoxide bis(ethylacetoacetate), titanium diisopropoxide bis(triethanolaminate), titanium lactate, polyhydroxytitanium stearate, zirconium tetra-normal-propoxide, zirconium tetra-normal-butoxide, zirconium tetraacetylacetonate, zirconium tributoxymonoacetylacetonate, zirconium monobutoxyacetylacetonate bis(ethylacetoacetate), zirconium dibutoxide bis(ethylacetoacetate), zirconium tetraacetylacetonate, and zirconium tributoxymonostearate. The coating agent composition for use according to the present invention contains, relative to 100 parts by weight of the vinyl alcohol copolymer, preferably 0.01 to 100 parts by weight, more preferably 0.1 to 80 parts by weight, especially preferably 1 to 50 parts by weight of the above curing agent.

[Inorganic particles having an active hydrogen group]

The coating agent composition for battery electrode or battery separator for use according to the present invention can further comprise inorganic particles or filler having an active hydrogen group. Specific examples of inorganic particles or fillers having an active hydrogen group include powders of a metal oxide, such as alumina, silica, zirconia, beryllia, magnesium oxide, titania, or iron oxide; sols, such as colloidal silica, a titania sol, and an alumina sol; clay minerals, such as talc, kaolinite, and smectite; carbides, such as silicon carbide and titanium carbide; nitrides, such as silicon nitride, aluminum nitride, and titanium nitride; borides, such as boron nitride, titanium boride, and boron oxide; composite oxides, such as mullite; hydroxides, such as lithium hydroxide, aluminum hydroxide, magnesium hydroxide, and iron hydroxide; and barium titanate, lithium carbonate, calcium carbonate, magnesium carbonate, strontium carbonate, magnesium silicate, lithium silicate, sodium silicate, potassium silicate, and glass. One type of these inorganic particles or fillers can be used, or two or more types of the inorganic particles or fillers can be used in combination.
The coating agent composition for use according to the present invention contains, relative to 100 parts by

weight of the vinyl alcohol copolymer, preferably 1 to 99 parts by weight, more preferably 10 to 98 parts by weight, especially preferably 50 to 97 parts by weight of the inorganic particles.

Preferred are inorganic particles which are dried at a temperature as high as about 200°C for one hour in order to activate the active hydrogen group on the surface of the particles. Activating the active hydrogen group improves the adhesion of the inorganic particles to the organic particles, and thus improves the mechanical strength and heat resistance, so that ions in the electrolyte are stabilized, improving the ionic conduction properties.

It is preferred that the inorganic particles do not contain an impurity which inhibits a battery reaction, and the inorganic particles preferably have a purity of 99% by weight or more, more preferably 99.9% by weight, further preferably 99.99% or more.

These inorganic particles may be used in the form of a powder, in the form of a water-dispersed colloid, such as a silica sol or an aluminum sol, or in the state of being dispersed in an organic solvent, such as an organosol. The inorganic particles may be contained in the thermally fusible organic particles, or used in the state of adhering to the surface of the thermally fusible organic particles, or added in an independent state from the thermally fusible organic particles.

The amount of the active hydrogen group on the surface of the inorganic particles is directly proportional to the specific surface area of the particles, and therefore the size of the inorganic particles is advantageously smaller, preferably in the range of from 0.001 to 1 μm, further preferably in the range of from 0.005 to 0.5 μm. Further, the inorganic particles in a porous form are preferably used for increasing the specific surface area, and, for example, silica gel, porous alumina, various types of Shirasu, or various types of zeolite can be used. The size of the inorganic particles is preferably smaller than that of the organic particles constituting the continuous phase so as not to prevent the formation of continuous phase by heat fusion of the organic particles, more preferably 1/2 or less, further preferably 1/10 or less of the size of the organic particles.

These inorganic particles can be covered by reacting an active hydrogen group on the surface of the particles with a silane coupling agent. Examples of such coupling agents include fluorine silane coupling agents, such as (tridecafluoro-1,1,2,2-tetrahydrooctyl)triethoxysilane; epoxy-modified silane coupling agents, such as a coupling agent manufactured by Shin-Etsu Chemical Co., Ltd. (trade name: KBM-403); oxetane-modified silane coupling agents, such as a coupling agent manufactured by Toagosei Co., Ltd. (trade name: TESOX); silane coupling agents, such as vinyltrimethoxysilane, vinyltriethoxysilane, γ-chloropropyltrimethoxysilane, γ-aminopropyltriethoxysilane, N-(β-aminoethyl)-γ-aminopropyltrimethoxysilane, N-(β-aminoethyl)-γ-aminopropylmethyldimethoxysilane, γ-glycidoxypropyltrimethoxysilane, β-glycidoxypropylmethyldimethoxysilane, γ-methacryloyloxypropyltrimethoxysilane, γ-methacryloyloxypropylmethyldimethoxysilane, γ-mercaptopropyltrimethoxysilane, and cyanohydrin silyl ether; and titanium coupling agents, such as triethanolamine titanate, titanium acetylacetonate, titanium ethylacetoacetate, titanium lactate, titanium lactate ammonium salt, tetrastearyl titanate, isopropyltricumylphenyl titanate, isopropyltri(N-aminoethyl-aminoethyl) titanate, dicumylphenyl oxyacetate titanate, isopropyltrioctanoyl titanate, isopropyldimethacrylisostearoyl titanate, titanium lactate ethyl ester, octylene glycol titanate, isopropyltriisostearoyl titanate, triisostearylisopropyl titanate, isopropyltridodecylbenzenesulfonyl titanate, tetra(2-ethylhexyl) titanate, butyl titanate dimer, isopropylisostearoyldiacryl titanate, isopropyl tri(dioctyl phosphate) titanate, isopropyl tris(dioctyl pyrophosphate) titanate, tetraisopropyl bis(dioctyl phosphite) titanate, tetraoctylbis(ditridecyl phosphite) titanate, tetra(2,2-diallyloxymethyl-1-butyl)bis(di-tridecyl) phosphite titanate, bis(dioctyl pyrophosphate)oxyacetate titanate, bis(dioctyl pyrophosphate)ethylene titanate, tetra-i-propyl titanate, tetra-n-butyl titanate, and diisostearoylethylene titanate. These coupling agents can be used individually or in combination. The coupling agent is preferably a titanium coupling agent or a silane coupling agent. The above coupling agent interacts with a battery electrode surface or a battery separator surface to improve the adhesion force.

[Polymer binder]

In the coating agent for use according to the present invention, in addition to the vinyl alcohol copolymer, a polymer binder can be further added for, e.g., adjusting the viscosity. Examples of polymer binders include completely saponified polyvinyl alcohol (e.g., Gohsenol NH-26, Gohsenol NH-18, Gohsenol N300, manufactured by The Nippon Synthetic Chemical Industry Co., Ltd.; KURARAY POVAL PVA-124, manufactured by Kuraray Co., Ltd.; and JC-25, manufactured by Japan Vam & Poval Co., Ltd.), partially saponified polyvinyl alcohol (e.g., KURARAY POVAL PVA-235, manufactured by Kuraray Co., Ltd.; and JP-33, manufactured by Japan Vam & Poval Co., Ltd.), modified polyvinyl alcohol (e.g., Gohsefimer K-210, Gohsefimer LW-200, Gohsefimer LW-100, Gohsefimer L-7504, Gohsefimer L-5407, Gohseran L-3266, Gohseran L-0301, Gohseran L-0302, Gohseran CKS-50, manufactured by The Nippon Synthetic Chemical Industry Co., Ltd.; KURARAY K POLYMER KL-118, KURARAY C POLYMER CM-318, KURARAY R POLYMER R-1130, KURARAY LM POLYMER LM-10HD, manufactured by Kuraray Co., Ltd.; and D Polymer DF-20, anionic modified PVA AF-17, manufactured by Japan Vam & Poval Co., Ltd.), carboxymethyl cellulose (e.g., H-CMC, DN-100L, 1120, 2200, manufactured by Daicel Chemical Industries, Ltd.; and MAC 200HC, manufactured by Nippon Paper Chemicals Co., Ltd.), hydroxyethyl cellulose (e.g., SP-400, manufactured by Daicel Chemical Industries, Ltd.), polyacrylamide

(ACCOFLOC A-102, manufactured by MT AquaPolymer, Inc.), polyoxyethylene (ALKOX E-30, manufactured by Meisei Chemical Works, Ltd.), epoxy resins (e.g., EX-614, manufactured by Nagase ChemteX Corporation; and EPIKOTE 5003-W55, manufactured by Japan Chemtech Ltd.), polyethyleneimine (EPOMIN P-1000, manufactured by Nippon Shokubai Co., Ltd.), polyacrylate (e.g., ACCOFLOC C-502, manufactured by MT AquaPolymer, Inc.), saccharides and derivatives thereof (e.g., Chitosan 5, manufactured by Wako Pure Chemical Industries, Ltd.; Esterified Starch Amycol, manufactured by Nippon Starch Chemical Co., Ltd.; and Cluster Dextrin, manufactured by Glico Nutrition Co., Ltd.), and polystyrenesulfonic acid (e.g., Poly-NaSS PS-100, manufactured by Tosoh Organic Chemical Co., Ltd.), and these water-soluble polymers can be used in the form of being dissolved in water, and polymers, such as modified polyvinyl alcohol (Cyanoresin CR-V, manufactured by Shin-Etsu Chemical Co., Ltd.), modified pullulan (Cyanoresin CR-S, manufactured by Shin-Etsu Chemical Co., Ltd.), and polyvinylidene fluoride (Kureha KF Polymer #1120, manufactured by Kureha Corporation), can be used in the form of being dissolved in N-methylpyrrolidone.

The coating agent composition for use according to the present invention contains, relative to 100 parts by weight of the vinyl alcohol copolymer, preferably 0.1 to 99 parts by weight, more preferably 1 to 80 parts by weight, especially preferably 3 to 50 parts by weight of a polymer binder.

[Salt]

In the battery electrode protective agent composition for use according to the present invention, a salt serving as a source for various ions can be incorporated. By virtue of this, the ionic conduction properties can be improved. A salt capable of providing counter anions and/or counter cations of an electrolyte used in a lithium-ion battery to which the composition is applied is especially preferably added to the composition, and examples of such salts include lithium hydroxide, lithium silicate, lithium hexafluorophosphate, lithium tetrafluoroborate, lithium perchlorate, lithium bis(trifluoromethanesulfonyl)imide, lithium bis(pentafluoroethanesulfonyl)imide, and lithium trifluoromethanesulfonate. The coating agent composition for battery electrode or battery separator for use according to the present invention contains, relative to 100 parts by weight of the vinyl alcohol copolymer, preferably 0.1 to 300 parts by weight, more preferably 0.5 to 200 parts by weight, especially preferably 1 to 100 parts by weight of the above salt.

[Liquid having ionic properties]

The coating agent composition for battery electrode or battery separator for use according to the present invention can further comprise a liquid having ionic properties. The liquid having ionic properties can be a solution having the above salt dissolved in a solvent or an ionic liquid. With respect to the solution having the salt dissolved in a solvent, when the solvent is water, examples of salts include sodium chloride, potassium chloride, and lithium chloride, and, when the solvent is an organic material, such as dimethyl carbonate, examples of salts include lithium hexafluorophosphate and tetraethylammonium borofluoride.

Examples of ionic liquids include imidazolium salt derivatives, such as 1,3-dimethylimidazolium methylsulfate, 1-ethyl-3-methylimidazolium bis(pentafluoroethyl sulfonyl)imide, and 1-ethyl-3-methylimidazolium bromide; pyridinium salt derivatives, such as 3-methyl-1-propylpyridinium bis(trifluoromethyl sulfonyl)imide and 1-butyl-3-methylpyridinium bis(trifluoromethyl sulfonyl)imide; alkylammonium derivatives, such as tetrabutylammonium heptadecafluorooctanesulfonate and tetraphenylammonium methanesulfonate; phosphonium salt derivatives, such as tetrabutylphosphonium methanesulfonate; and conduction imparting composite agents, such as a composite of polyalkylene glycol and lithium perchlorate.

The coating agent composition for battery electrode or battery separator for use according to the present invention contains, relative to 100 parts by weight of the vinyl alcohol copolymer, preferably 0.01 to 1,000 parts by weight, more preferably 0.1 to 100 parts by weight, especially preferably 0.5 to 50 parts by weight of a liquid having ionic properties.

[Coupling agent]

The coating agent composition for battery electrode or battery separator for use according to the present invention can further comprise a coupling agent, and the above-mentioned coupling agent can be used.

The coating agent composition for battery electrode or battery separator for use according to the present invention contains, relative to 100 parts by weight of the vinyl alcohol copolymer, preferably 0.01 to 100 parts by weight, especially preferably 0.01 to 5 parts by weight of a coupling agent.

[Solvent]

The coating agent composition for battery electrode or battery separator for use according to the present invention can further comprise a solvent for controlling the fluidity. Further, a film is formed in a state in which a part of

the solvent remains in the coating agent composition, making it possible to improve the ionic conduction properties. Examples of solvents include hydrocarbons (such as propane, n-butane, n-pentane, isohexane, cyclohexane, n-octane, isooctane, benzene, toluene, xylene, ethylbenzene, amylbenzene, turpentine oil, and pinene), halogen hydrocarbons (such as methyl chloride, chloroform, carbon tetrachloride, ethylene chloride, methyl bromide, ethyl bromide, chlorobenzene, chlorobromomethane, bromobenzene, fluorodichloromethane, dichlorodifluoromethane, and difluorochloroethane), alcohols (such as methanol, ethanol, n-propanol, isopropanol, n-amyl alcohol, isoamyl alcohol, n-hexanol, n-heptanol, 2-octanol, n-dodecanol, nonanol, cyclohexanol, and glycidol), ethers and acetals (such as ethyl ether, dichloroethyl ether, isopropyl ether, n-butyl ether, diisoamyl ether, methyl phenyl ether, ethyl benzyl ether, furan, furfural, 2-methylfuran, cineol, and methylal), ketones (such as acetone, methyl ethyl ketone, methyl n-propyl ketone, methyl n-amyl ketone, diisobutyl ketone, phorone, isophorone, cyclohexanone, and acetophenone), esters (such as methyl formate, ethyl formate, propyl formate, methyl acetate, ethyl acetate, propyl acetate, n-amyl acetate, methylcyclohexyl acetate, methyl butyrate, ethyl butyrate, propyl butyrate, butyl stearate, propylene carbonate, diethyl carbonate, ethylene carbonate, and vinylene carbonate), polyhydric alcohols and derivatives thereof (such as ethylene glycol, ethylene glycol monomethyl ether, ethylene glycol monomethyl ether acetate, ethylene glycol monoethyl ether, methoxymethoxyethanol, ethylene glycol monoacetate, diethylene glycol, diethylene glycol monomethyl ether, propylene glycol, and propylene glycol monoethyl ether), fatty acids and phenols (such as formic acid, acetic acid, acetic anhydride, propionic acid, propionic anhydride, butyric acid, isovaleric acid, phenol, cresol, o-cresol, and xylenol), nitrogen compounds (such as nitromethane, nitroethane, 1-nitropropane, nitrobenzene, monomethylamine, dimethylamine, trimethylamine, monoethylamine, diamylamine, aniline, monomethylaniline, o-toluidine, o-chloroaniline, dicyclohexylamine, dicyclohexylamine, monoethanolamine, formamide, N,N-dimethylformamide, acetamide, acetonitrile, pyridine, $\alpha$-picoline, 2,4-lutidine, quinoline, and morpholine), sulfur, phosphorus and other compounds (such as carbon disulfide, dimethyl sulfoxide, 4,4-diethyl-1,2-dithiolane, dimethyl sulfide, dimethyl disulfide, methanethiol, propane sultone, triethyl phosphate, triphenyl phosphate, diethyl carbonate, ethylene carbonate, and amyl borate), inorganic solvents (such as liquid ammonia and silicone oil), and liquids, such as water. Of these, from the viewpoint of achieving excellent dissolution stability, a polar solvent having a hydroxyl group, such as water or an alcohol, or an aprotic polar solvent, such as N-methylpyrrolidone or dimethyl sulfoxide, can be preferably used, and these solvents can be used individually or in combination. A solvent, such as water or a polar solvent, can constitute the remainder of the vinyl alcohol copolymer in the coating agent composition.

In the coating agent composition for battery electrode or battery separator for use according to the present invention, a solvent of an arbitrary type can be added in an arbitrary ratio for controlling the viscosity of the composition, and, from the viewpoint of obtaining excellent coating properties, the composition preferably has a viscosity in the range of from 1 to 10,000 mPa·s, more preferably in the range of from 10 to 5,000 mPa·s, especially preferably in the range of from 20 to 3,000 mPa·s. Further, a solvent can be selected according to the material for the electrode and/or separator used, and, for example, there can be appropriately selected a solvent in which the electrode material or separator is not dissolved or which solvent does not cause the electrode material or separator to suffer corrosion.

[Stabilizer]

The coating agent composition for battery electrode or battery separator for use according to the present invention can further comprise, if necessary, a stabilizer appropriately selected. Specific examples of stabilizers include phenolic antioxidants, such as 2,6-di-tert-butyl-phenol, 2,4-di-tert-butyl-phenol, 2,6-di-tert-butyl-4-ethyl-phenol, and 2,4-bis-(n-octylthio)-6-(4-hydroxy-3,5-di-tert-butyl-anilino)-1,3,5-triazine; aromatic amine antioxidants, such as alkyldiphenylamine, N,N'-diphenyl-p-phenylenediamine, 6-ethoxy-2,2,4-trimethyl-1,2-dihydroquinoline, and N-phenyl-N'-isopropyl-p-phenylenediamine; sulfide hydroperoxide decomposers, such as dilauryl 3,3'-thiodipropionate, ditridecyl-3,3'-thiodipropionate, bis[2-methyl-4-{3-n-alkylthiopropionyloxy}-5-tert-butyl-phenyl] sulfide, and 2-mercapto-5-methyl-benzimidazole; phosphorus hydroperoxide decomposers, such as tris(isodecyl) phosphite, phenyldiisooctyl phosphite, diphenylisooctyl phosphite, di(nonylphenyl)pentaerythritol diphosphite, 3,5-di-tert-butyl-4-hydroxy-benzylphosphate diethyl ester, and sodium bis(4-tert-butylphenyl)phosphate; salicylate light stabilizers, such as phenyl salicylate and 4-tert-octylphenyl salicylate; benzophenone light stabilizers, such as 2,4-dihydroxybenzophenone and 2-hydroxy-4-methoxybenzophenone-5-sulfonic acid; benzotriazole light stabilizers, such as 2-(2'-hydroxy-5'-methylphenyl)benzotriazole and 2,2'-methylenebis[4-(1,1,3,3-tetramethylbutyl)-6-(2N-benzotriazol-2-yl)phenol]; hindered amine light stabilizers, such as phenyl-4-piperidinyl carbonate and bis-[2,2,6,6-tetramethyl-4-piperidinyl] sebacate; Ni light stabilizers, such as [2,2'-thio-bis(4-t-octylphenolato)]-2-ethylhexylamine-nickel-(II); cyanoacrylate light stabilizers; oxalic anilide light stabilizers; and fullerene, hydrogenated fullerene, and fullerene hydroxide. These stabilizers can be used individually or in combination.

The coating agent composition for battery electrode or battery separator for use according to the present invention contains, relative to 100 parts by weight of the vinyl alcohol copolymer, preferably 0.01 to 10 parts by weight, more preferably 0.05 to 5 parts by weight, especially preferably 0.1 to 1 part by weight of a stabilizer.

[Surfactant]

The coating agent composition for battery electrode or battery separator for use according to the present invention can further comprise a surfactant, and, by virtue of this, the wetting and antifoaming properties of the composition can be controlled. An ionic surfactant can be used for improving the ionic conduction properties.

With respect to the surfactant, examples of anionic surfactants include a soap, lauryl sulfate, a polyoxyethylene alkyl ether sulfate, an alkylsulfonate, an alkylbenzenesulfonate, a polyoxyethylene alkyl ether phosphate, a polyoxyethylene alkyl phenyl ether phosphate, an N-acylamino acid salt, an $\alpha$-olefinsulfonate, an alkyl sulfate salt, an alkyl phenyl ether sulfate salt, a methyltaurine salt, trifluoromethanesulfonate salt, pentafluoroethanesulfonate salt, heptafluoropropanesulfonate salt, and nonafluorobutanesulfonate salt, and, as counter cations, sodium ions or lithium ions can be used. In a lithium-ion battery, a lithium ion type is more preferred, and, in a sodium-ion battery, a sodium ion type is more preferred.

Examples of amphoteric surfactants include an alkyldiaminoethylglycine hydrochloride, a 2-alkyl-N-carboxymethyl-N-hydroxyethylimidazolium betaine, betaine lauryldimethylaminoacetate, coconut oil fatty acid amide propylbetaine, fatty acid alkylbetaine, sulfobetaine, and amine oxide, and examples of nonionic surfactants include alkyl ester compounds of polyethylene glycol, alkyl ether compounds, such as triethylene glycol monobutyl ether, ester compounds, such as polyoxysorbitan ester, alkylphenol compounds, fluorine compounds, and silicone compounds.

These surfactants can be used individually or in combination.

The coating agent composition for battery electrode or battery separator for use according to the present invention contains, relative to 100 parts by weight of the vinyl alcohol copolymer, preferably 0.01 to 50 parts by weight, more preferably 0.1 to 20 parts by weight, especially preferably 1 to 10 parts by weight of a surfactant.

[Preservative agent]

The coating agent composition for battery electrode or battery separator for use according to the present invention can further comprise a preservative agent, and, by virtue of this, the storage stability of the composition can be controlled.

Examples of preservative agents include alcohols, such as methanol, ethanol, isopropyl alcohol, and ethylene glycol; acids, such as benzoic acid, salicylic acid, dehydroacetic acid, and sorbic acid; salts, such as sodium benzoate, sodium salicylate, sodium dehydroacetate, and potassium sorbate; isothiazoline preservative agents, such as 2-methyl-4-isothiazolin-3-one and 1,2-benzisothiazolin-3-one; parahydroxybenzoates, phenoxyethanol, benzalkonium chloride, and chlorhexidine hydrochloride.

These preservative agents can be used individually or in combination.

The coating agent composition for battery electrode or battery separator for use according to the present invention contains, relative to 100 parts by weight of the vinyl alcohol copolymer, preferably 0.001 to 1 part by weight, more preferably 0.005 to 0.5 part by weight of an preservative agent.

[Production of the coating agent composition for battery electrode or battery separator]

The coating agent composition for battery electrode or battery separator for use according to the present invention can be obtained in the form of, e.g., a powder mixture having fluidity or a solution or suspension by mixing together the above-mentioned components and stirring the resultant mixture. The stirring can be made by appropriately selecting a stirring apparatus, such as a propeller mixer, a planetary mixer, a hybrid mixer, a kneader, an emulsifying homogenizer, or an ultrasonic homogenizer. Further, the stirring can be made while heating or cooling if necessary.

[Method for forming a layer of the coating agent composition]

In the formation of a coating layer of the coating agent composition on a battery electrode or battery separator, for example, a gravure coater, a slit die coater, a spray coater, or dipping can be used. Drying can be made by a known method, such as a hot-air oven or an IR oven. The thickness of the coating layer is preferably in the range of from 0.01 to 100 $\mu$m, further preferably in the range of from 0.05 to 50 $\mu$m from the viewpoint of achieving excellent electrical properties and excellent adhesion properties. When the coating layer has too small a thickness, the insulation properties with respect to electronic conduction become poor, increasing a danger of the occurrence of short-circuiting. Further, a danger is increased that the coating layer having too small a thickness cannot cover the uneven surface of an electrode or separator to cause a pinhole. Conversely, when the coating layer has too large a thickness, the resistance to ionic conduction, which is proportionally increased according to the thickness of the coating layer, is increased to cause the charge/discharge characteristics of the battery to be poor.

[Electrode and/or separator]

The surface of a battery electrode and/or battery separator can be protected by the coating agent composition for battery electrode or battery separator for use according to the present invention.

The battery electrode or battery separator protected by the coating agent composition for battery electrode or battery separator for use according to the present invention can be produced by coating a battery electrode or battery separator with the composition obtained by incorporating the above-mentioned components, and drying the composition. As examples of the battery electrodes, there can be mentioned positive electrodes and/or negative electrodes for various types of batteries and electrical double layer capacitors, and at least one side of the electrode can be coated or impregnated with the coating agent composition for battery electrode or battery separator. Examples of separators include porous materials made of polypropylene or polyethylene, and nonwoven fabric made of cellulose, polypropylene, or polyethylene, and both sides or one side of the separator can be coated or impregnated with the coating agent composition. The coating agent composition for battery electrode or battery separator for use according to the present invention can be used in the state of adhering to the opposite separator or electrode, and can be thermally fused by hot-press upon assembling the battery. Alternatively, the coating agent composition can be used as a solid electrolyte membrane instead of a separator.

[Battery]

A battery can be produced from the battery electrode and/or battery separator coated with the coating agent composition for battery electrode or battery separator for use according to the present invention. The battery can be produced by a known method.

EXAMPLES

Hereinbelow, the present invention will be described in more detail with reference to the following Examples, which should not be construed as limiting the scope of the present invention. The indication "part(s)" for the amount is given by weight unless otherwise specified.

[Test Example 1]

With respect to the lithium-ion secondary batteries produced in the below-mentioned Examples and Comparative Example, the following characteristics were measured. The results of the measurement are shown in Table 1 below.

(Measurement of initial capacity)

For obtaining an initial capacity, charging was conducted at a constant current of 0.01 mA until the voltage became 4.2 V, and then charging was conducted at a constant voltage of 4.2 V for 2 hours. Subsequently, discharging was conducted at a constant current of 0.01 mA until the voltage became 3.5 V. A series of the above operations was repeated three times, and the discharge capacity at the 3rd cycle was taken as an initial capacity.

(Initial internal resistance)

The potential of the cell obtained after measuring an initial capacity was increased to 4.2 V, and, as an initial internal resistance, an impedance at 1 kHz was measured with a voltage change of ±15 mV from the above potential as a center.

(Rate characteristics)

Discharge rates were individually determined from the initial capacity, and a discharge capacity was measured for each of the discharge rates. In each charging operation, charging was conducted at a constant current over 10 hours until the voltage was increased to 4.2 V, and then charging was conducted at a constant voltage of 4.2 V for 2 hours. Subsequently, discharging was conducted at a constant current over 10 hours until the voltage became 3.5 V, and the discharge capacity obtained at that time was taken as a discharge capacity for 0.1C. Next, the same charging operation was conducted and then, discharging was conducted at a current at which discharging was completed in one hour from the discharge capacity determined for 0.1C, and the discharge capacity determined at that time was taken as a discharge capacity for 1 C. Similarly, discharge capacities for 3C, 10C, and 30C were individually determined, and, taking the discharge capacity for 0.1C as 100%, a capacity maintaining ratio was determined by making a calculation.

(Cycle life)

A charge/discharge test in which charging was conducted at 1C until the voltage became 4.2 V and charging was conducted at a constant voltage of 4.2 V for 2 hours and then discharging was conducted at 1C until the voltage became 3.5 V was performed. In this instance, a percentage of the discharge capacity to that in the first discharge was calculated, and the number of charge/discharge cycles at which the capacity was reduced to less than 80% was determined as a life.

(Float resistance)

Charging was conducted at 0.1C at 45°C until the voltage became 4.2 V, and a change of the impedance at a constant voltage of 4.2 V was measured substantially on alternate days. A period of time until the resistance was increased two times was determined as a life.

(Heat resistance insulation test)

A test was performed in which charging was conducted at 1C until the voltage became 4.2 V, and charging was conducted at a constant voltage of 4.2 V for 2 hours, and the resultant battery in the full charge state was increased in temperature from 25 to 260°C at a rate of 10°C per hour, and then cooled to about 25°C at a rate of 20°C per hour, and a resistance after the durability test was checked by the above-mentioned (internal resistance) measurement method. Evaluations were made in accordance with the following criteria.

The impedance at 1 kHz is:

◎: 10 MΩ or more
○: 100 to 10 MΩ
Δ: 1 to 100 kΩ
x: Less than 1 kΩ

(Observation of heat resistance appearance)

A test method was the same as the above-mentioned heat resistance insulation test, and the battery obtained after the test was disassembled to examine the state of the inside. Evaluations were made in accordance with the following criteria.

◎: The positive electrode and negative electrode are not directly touching and the insulating state is maintained, and the battery electrode protective layer is adhering to the electrode and/or separator.
○: The positive electrode and negative electrode are not directly touching and the insulating state is maintained, but the battery electrode protective layer suffers partial lifting and is not peeled off.
Δ: The removal proceeds and a part of the positive and negative electrodes is exposed.
x: The positive and negative electrodes are touching, so that short-circuiting has occurred.

[Example 1]

(Production of vinyl alcohol copolymer 1)

Into a reaction vessel equipped with a reflux condenser, a dropping funnel, and a stirrer were charged 100 parts of vinyl acetate, 300 parts of methanol, and 16 parts of 3,4-diacetoxy-1-butene, and azobisisobutyronitrile in an amount of 0.255 mol% (based on the mole of the charged vinyl acetate) was added to the resultant mixture and the temperature of the mixture was increased under a nitrogen gas stream while stirring to initiate a polymerization. After 45 minutes from the initiation of polymerization, 99 parts of vinyl acetate and 144 parts of 3,4-diacetoxy-1-butene were dropwise added to the mixture over 9 hours. After completion of the addition, the polymerization was further conducted for 75 minutes, and then m-dinitrobenzene was added to the reaction mixture to terminate the polymerization. At the time of the termination of polymerization, the rate of polymerization of vinyl acetate was 88%. Subsequently, the unreacted vinyl acetate monomer was removed from the polymerization system by a method of blowing methanol vapor to obtain a methanol solution of a copolymer.

Then, the above-obtained methanol solution was diluted with methanol to adjust the concentration of the solution to 50%, and then charged into a kneader and, while maintaining the temperature of the solution at 35°C, a 2% methanol solution of sodium hydroxide was added to the solution in such an amount that the amount of sodium hydroxide was 12

mmol, relative to 1 mol of the total of the vinyl acetate structural units and 3,4-diacetoxy-1-butene structural units in the copolymer, effecting saponification. As the saponification proceeded, a saponification product precipitated, and, at a time when the saponification product became in a particulate form, the product was collected by filtration and washed well with methanol, and dried in a hot-air dryer to obtain desired vinyl alcohol copolymer 1.

With respect to the obtained vinyl alcohol copolymer 1, a saponification value was 99.1 mol%, as analyzed in terms of the alkali consumption required for hydrolyzing the residual vinyl acetate and residual 3,4-diacetoxy-1-butene, and an average degree of polymerization was 300, as analyzed in accordance with JIS K6726. Further, the amount of a side chain containing the 1,2-diol structure represented by the general formula (1) introduced into the copolymer was 8 mol%, as determined by a measurement of $^1$H-NMR (internal standard: tetramethylsilane; solvent: DMSO-d6) and making a calculation.

(Production of an aqueous emulsion)

Into a 2 L stainless steel reaction vessel equipped with a stirrer and a reflux condenser were charged 670 parts of water, 46 parts of vinyl alcohol copolymer 1, 2 parts of sodium acetate, and 1 part of acid sodium sulfite, and the reaction vessel was heated to 85°C to dissolve vinyl alcohol copolymer 1. Then, the temperature of the reaction vessel was maintained at 80°C, and to the mixture in the reaction vessel was added 66 parts of a mixed monomer which had been preliminary prepared by mixing [358 parts of butyl acrylate/293 parts of methyl methacrylate/6.5 parts of acetoacetoxyethyl methacrylate = 54.4/44.6/1 (weight ratio)], and 30% of an aqueous ammonium persulfate solution, which had been obtained by dissolving 1.6 part of ammonium persulfate as a polymerization initiator in 30 parts of water, was added to the resultant mixture to effect an initial polymerization reaction for one hour. Then, the remaining mixed monomer and 60% of the aqueous ammonium persulfate solution as a polymerization initiator were dropwise added to the reaction vessel over 4 hours to conduct the polymerization. After completion of the addition, 10% of the aqueous ammonium persulfate solution was added to the resultant reaction mixture and matured at the same temperature for one hour to obtain an aqueous synthetic resin emulsion having a nonvolatile content of 50.1%.

With respect to the obtained aqueous emulsion, a value (W) determined from the formula (1) above was 80% by weight.

(Preparation of a coating agent composition)

0.45 kg of the above-produced emulsion and 4.5 kg of water were placed in a 10 L beaker and stirred at room temperature for 2 hours until the resultant mixture became uniform to obtain a coating agent composition.

(Production of a positive electrode)

In a 10 L planetary mixer equipped with a cooling jacket were placed 540 parts of a 15% NMP solution of PVdF (Kureha KF Polymer #1120, manufactured by Kureha Corporation), 1,150 parts of lithium cobalt oxide (C-5H, manufactured by Nippon Chemical Industrial Co., Ltd.), 110 parts of acetylene black (DENKA BLACK HS-100, manufactured by Denki Kagaku Kogyo Kabushiki Kaisha), and 5,200 parts of NMP, and the resultant mixture was stirred while cooling so that the temperature of the mixture did not exceed 30°C until the mixture became uniform. The resultant active material was applied to a rolled aluminum current collector (manufactured by Nippon Foil Mfg. Co., Ltd.; width: 300 mm; thickness: 20 μm) so that the applied material had a width of 180 mm and a thickness of 200 μm, and dried in a hot-air oven at 160°C for 30 seconds. The resultant current collector was roll-pressed at a linear pressure of 600 kgf/cm. The positive electrode active material layer formed after pressed had a thickness of 21 μm.

(Production of a negative electrode)

In a 10 L planetary mixer equipped with a cooling jacket were placed 540 parts of a 15% NMP solution of PVdF (Kureha KF Polymer #9130, manufactured by Kureha Corporation), 1,180 parts of graphite (GR-15, manufactured by Nippon Graphite Industries, Ltd.), and 4,100 parts of NMP, and the resultant mixture was stirred while cooling so that the temperature of the mixture did not exceed 30°C until the mixture became uniform. The resultant active material was applied to a rolled copper foil current collector (manufactured by Nippon Foil Mfg. Co., Ltd.; width: 300 mm; thickness: 20 μm) so that the applied material had a width of 180 mm and a thickness of 200 μm, and dried in a hot-air oven at 100°C for 2 minutes. The resultant current collector was roll-pressed at a linear pressure of 400 kgf/cm. The negative electrode active material layer formed after pressed had a thickness of 27 μm.

(Production of a negative electrode coated with the coating agent composition for battery electrode or battery separator)

The above-prepared coating agent composition for battery electrode or battery separator was applied to the above-obtained negative electrode by means of a gravure coater, and heated in a nitrogen atmosphere at 100°C for 60 seconds to produce a negative electrode coated with the coating agent composition for battery electrode or battery separator having a thickness of 5 μm.

(Production of a lithium-ion secondary battery)

Each of the positive electrode and the negative electrode coated with the battery electrode coating agent composition was cut into 40 mm × 50 mm so that a 10 mm width region having no active material layer in both ends was included at the short side, and an aluminum tab and a nickel tab were welded by resistance welding to the metal exposed portions of the positive electrode and the negative electrode, respectively. A separator (#2400, manufactured by Celgard Co., Ltd.) was cut into a size having a width of 45 mm and a length of 120 mm, and folded in three and the positive electrode and negative electrode were disposed between the folded separator so that the positive electrode and negative electrode faced to each other, and the resultant material was disposed between an aluminum laminate cell folded in half having a width of 50 mm and a length of 100 mm, and a sealant was placed between the portions with which the tabs for the individual electrodes were in contact, and then the sealant portion and the sides perpendicular to the sealant portion were subjected to heat lamination to obtain the cell in a bag form. The resultant cell was subjected to vacuum drying in a vacuum oven at 100°C for 12 hours, and then vacuum-impregnated with a 1 M electrolytic solution comprising lithium hexafluorophosphate/EC:DEC = 1:1 (LBG-96533, manufactured by Kishida Chemical Co., Ltd.) in a dry glove box, and then the excess electrolytic solution was withdrawn, followed by sealing using a vacuum sealer, to produce a lithium-ion battery.

[Example 2]

In Example 2, a method is described in which a lithium-ion secondary battery is produced using an electrode having a negative electrode coated with the coating agent composition for battery electrode or battery separator.

(Production of vinyl alcohol copolymer 2)

Into a reaction vessel equipped with a reflux condenser, a dropping funnel, and a stirrer were charged 68.0 parts of vinyl acetate, 23.8 parts of methanol, and 8.2 parts of 3,4-diacetoxy-1-butene, and azobisisobutyronitrile in an amount of 0.3 mol% (based on the mole of the charged vinyl acetate) was added to the resultant mixture and the temperature of the mixture was increased under a nitrogen gas stream while stirring to initiate a polymerization. At a point in time when the rate of polymerization of vinyl acetate became 90%, m-dinitrobenzene was added to the reaction mixture to terminate the polymerization. Subsequently, the unreacted vinyl acetate monomer was removed from the polymerization system by a method of blowing methanol vapor to obtain a methanol solution of a copolymer.

Then, the above-obtained methanol solution was diluted with methanol to adjust the concentration of the solution to 45%, and then charged into a kneader and, while maintaining the temperature of the solution at 35°C, a 2% methanol solution of sodium hydroxide was added to the solution in such an amount that the amount of sodium hydroxide was 9 mmol, relative to 1 mol of the total of the vinyl acetate structural units and 3,4-diacetoxy-1-butene structural units in the copolymer, effecting saponification. As the saponification proceeded, a saponification product precipitated, and, at a time when the saponification product became in a particulate form, the product was collected by filtration and washed well with methanol, and dried in a hot-air dryer to obtain desired vinyl alcohol copolymer 2.

With respect to the obtained vinyl alcohol copolymer 2, a saponification value was 79.7 mol%, as analyzed in terms of the alkali consumption required for hydrolyzing the residual vinyl acetate and residual 3,4-diacetoxy-1-butene, and an average degree of polymerization was 450, as analyzed in accordance with JIS K6726. Further, the amount of a side chain containing the 1,2-diol structure represented by the general formula (1) introduced into the copolymer was 6 mol%, as determined by a measurement of $^1$H-NMR (internal standard: tetramethylsilane; solvent: DMSO-d6) and making a calculation.

(Production of a resin composition)

Using, as a styrene thermoplastic elastomer, a styrene/ethylene/butylene block copolymer (SEBS) having a carboxyl group {"Tuftec M1913", manufactured by Asahi Kasei Corporation (acid value: 10 mg $CH_3ONa$/g; melt viscosity: 1,060 mPa·s (at 220°C and at a shear rate of 122 $sec^{-1}$))}, 20 parts of the copolymer and 80 parts of vinyl alcohol polymer 2 were dry-blended, and then melt-kneaded using a twin-screw extruder under the conditions shown below to obtain a

resin composition.

Diameter (D): 15 mm
L/D = 60
Number of revolutions of the screw: 200 rpm
Set temperature: C1/C2/C3/C4/C5/C6/D = 90/205/210/210/210/215/220/220/220°C
Extrusion rate: 1.5 kg/hr

(Preparation of a coating agent composition)

1 kg of the above-produced resin composition and 5 kg of water were placed in a 10 L beaker at room temperature, and the resultant mixture was heated to 80°C while stirring, and stirred for 2 hours to prepare an emulsion, obtaining a coating agent composition.

(Production of a lithium-ion secondary battery)

A lithium-ion secondary battery was produced by substantially the same method as in Example 1 except that the above-obtained coating agent composition was used.

[Example 3]

(Preparation of a coating agent composition)

0.5 kg of alumina particles (NanoTek $Al_2O_3$ 31 nm, manufactured by C. I. Kasei Co., Ltd.) were added to 1.5 kg of the coating agent composition in Example 1 and dispersed using a propeller mixer until the resultant mixture became uniform, and then further dispersed using a bead mill to obtain a coating agent composition.

(Production of a lithium-ion secondary battery)

A lithium-ion secondary battery was produced by substantially the same method as in Example 1 except that the above-obtained coating agent composition was used.

[Example 4]

(Preparation of a coating agent composition)

10 g of a surfactant (lithium dodecylbenzenesulfonate) was added to 1.5 kg of the coating agent composition in Example 1 and dispersed using a propeller mixer until the resultant mixture became uniform to obtain a coating agent composition.

(Production of a lithium-ion secondary battery)

A lithium-ion secondary battery was produced by substantially the same method as in Example 1 except that the above-obtained coating agent composition was used.

[Example 5]

(Preparation of a coating agent composition)

10 g of a surfactant (lithium dodecylbenzenesulfonate) was added to 2 kg of the coating agent composition in Example 3 and dispersed using a propeller mixer until the resultant mixture became uniform to obtain a coating agent composition.

(Production of a lithium-ion secondary battery)

A lithium-ion secondary battery was produced by substantially the same method as in Example 1 except that the above-obtained coating agent composition was used.

[Comparative Example 1]

(Preparation of a coating agent composition)

A coating agent composition was prepared by substantially the same method as in Example 1 except that, instead of vinyl alcohol copolymer 1 in Example 1, PVA (KURARAY POVAL PVA-105, manufactured by Kuraray Co., Ltd.; completely saponified PVA; average degree of polymerization: 500) was used.

(Production of a lithium-ion secondary battery)

A lithium-ion secondary battery was produced by substantially the same method as in Example 1 except that the above-prepared coating agent composition was used.

[Table 1]

| | Initial capacity (mA) | Initial internal resistance (Ω) | Rate characteristics (Discharge capacity maintaining ratio %) | | | | Cycle life (Cycle) | Float resistance | Heat resistance | Heat resistance appearance |
|---|---|---|---|---|---|---|---|---|---|---|
| | | | 1 C | 3 C | 10 C | 30 C | | | | |
| Example 1 | 5.3 | 3.6 | 99 | 93 | 81 | 44 | 700 | 910 | ○ | ○ |
| Example 2 | 5.1 | 4.3 | 97 | 89 | 70 | 32 | 650 | 800 | ○ | ○ |
| Example 3 | 5.5 | 3.7 | 99 | 93 | 83 | 45 | 730 | 890 | ○ | ◎ |
| Example 4 | 5.4 | 3.2 | 99 | 96 | 87 | 53 | 810 | 950 | ○ | ○ |
| Example 5 | 5.6 | 2.4 | 99 | 98 | 90 | 63 | 1500 | 1800 | ◎ | ◎ |
| Comparati ve example 1 | 4.2 | 4.9 | 95 | 77 | 66 | 27 | 440 | 620 | × | × |

INDUSTRIAL APPLICABILITY

The coating agent composition for battery electrode or battery separator for use according to the present invention is advantageous in that the coating layer obtained from the composition has excellent adhesion to an electrode or battery separator and low internal resistance as well as more excellent electrochemical durability than that of a conventional coating layer, making it possible to provide a battery having excellent long-term reliability.

DESCRIPTION OF REFERENCE NUMERALS

1: Layer of the coating agent composition for battery electrode or battery separator
2: Active material layer
3: Current collector
4: Separator

## Claims

1. Use of a composition comprising a vinyl alcohol copolymer having a structural unit represented by the following general formula (1):

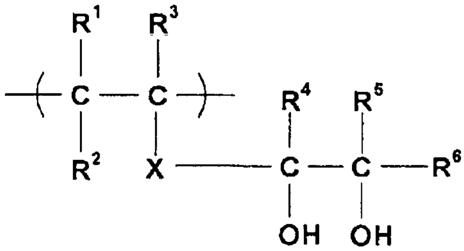

(1)

wherein each of $R^1$, $R^2$, and $R^3$ independently represents a hydrogen atom or an organic group, X represents a single bond or a bonding chain, and each of $R^4$, $R^5$, and $R^6$ independently represents a hydrogen atom or an organic group, and
an aqueous emulsion of a synthetic resin obtained by polymerizing a copolymerizable monomer having an acrylic monomer as a main component or
an aqueous emulsion of a styrene thermoplastic elastomer,

in a lithium-ion battery to coat the battery electrode or the battery separator with a protective coating.

2. The use according to claim 1, wherein the aqueous emulsion exhibits an apparent graft ratio W, expressed by the formula

$$W = w2/w1 \times 100$$

wherein W represents % by weight
w1: represents the oven-dry weight in grams of a film before extraction, and
w2: represents the oven-dry weight in grams of a film after extraction as determined by the method defined in the specification of 60 to 90% by weight.

3. The use according to claim 1 or claim 2, wherein the composition further comprises inorganic particles.

4. The use according to claim 3, wherein the inorganic particles are metal oxide powders.

5. The use according to any one of claims 1 to 4, wherein the composition further comprises a salt selected from lithium

hydroxide, lithium silicate, lithium hexafluorophosphate, lithium tetrafluoroborate, lithium perchlorate, lithium bis(trifluoromethanesulfonyl)imide, lithium bis(pentafluoroethanesulfonyl)imide, lithium trifluoromethanesulfonate, sodium hydroxide, sodium perchlorate, calcium hydroxide, calcium perchlorate, magnesium perchlorate, tetraethylammonium tetrafluoroborate, triethylmethylammonium bis(trifluoromethanesulfonyl)imide, and tetraethylammonium bis(trifluoromethanesulfonyl)imide.

## Patentansprüche

1. Verwendung einer Zusammensetzung, umfassend:

ein Vinylalkohol-Copolymer mit einer Struktureinheit der nachstehenden allgemeinen Formel (1):

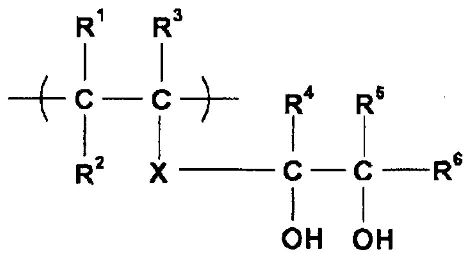

(1)

worin jedes $R^1$, $R^2$ und $R^3$ unabhängig ein Wasserstoffatom oder eine organische Gruppe darstellt, X eine Einfachbindung oder eine Bindungskette darstellt und jedes $R^4$, $R^5$ und $R^6$ unabhängig ein Wasserstoffatom oder eine organische Gruppe darstellt, und
eine wässrige Emulsion eines synthetischen Harzes, erhalten durch Polymerisieren eines copolymerisierbaren Monomers, das ein Acrylmonomer als Hauptkomponente aufweist, oder eine wässrige Emulsion eines thermoplastischen Styrolelastomers,
in einer Lithiumionenbatterie zum Beschichten der Batterieelektrode oder des Batterieseparators mit einer Schutzschicht.

2. Verwendung gemäss Anspruch 1, wobei die wässrige Emulsion ein scheinbares Pfropfverhältnis W, ausgedrückt durch die Formel:

$$W = w2/w1 \times 100$$

worin:

W Gew.% darstellt,
w1 das Ofen-Trockengewicht in Gramm einer Folie vor der Extraktion darstellt, und
w2 das Ofen-Trockengewicht in Gramm einer Folie nach der Extraktion darstellt,
wie nach dem in der Beschreibung definierten Verfahren bestimmt, von 60 bis 90 Gew.% aufweist.

3. Verwendung gemäss Anspruch 1 oder Anspruch 2, wobei die Zusammensetzung ferner anorganische Partikel umfasst.

4. Verwendung gemäss Anspruch 3, wobei die anorganischen Partikel Metalloxidpulver sind.

5. Verwendung gemäss irgendeinem der Ansprüche 1 bis 4, wobei die Zusammensetzung ferner ein Salz, ausgewählt aus Lithiumhydroxid, Lithiumsilicat, Lithiumhexafluorphosphat, Lithiumtetrafluorborat, Lithiumperchlorat, Lithiumbis(trifluormethansulfonyl)-imid, Lithiumbis(pentafluorethansulfonyl)imid, Lithiumtrifluormethansulfonat, Natriumhydroxid, Natriumperchlorat, Calciumhydroxid, Calciumperchlorat, Magnesiumperchlorat, Tetraethylammoniumtetrafluorborat, Triethylmethylammoniumbis(trifluormethansulfonyl)imid und Tetraethylammoniumbis(trifluormethansulfonyl)imid, umfasst.

**Revendications**

1. Utilisation d'une composition comprenant

- un copolymère d'alcool vinylique ayant une unité structurelle représenté par la formule générale (1) suivante :

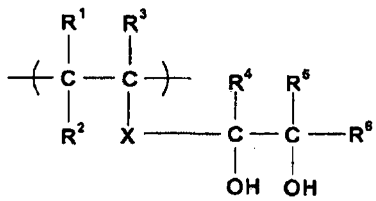

(1)

dans laquelle chacun parmi $R^1$, $R^2$ et $R^3$ représente indépendamment un atome d'hydrogène ou un groupe organique, X représente une simple liaison ou une chaîne de liaison, et chacun parmi $R^4$ et $R^5$ et $R^6$ représente indépendamment un atome d'hydrogène ou un groupe organique, et
- une émulsion aqueuse d'une résine synthétique obtenue par polymérisation d'un monomère copolymérisable ayant un monomère acrylique comme composant principal, ou une émulsion aqueuse d'un élastomère thermoplastique de styrène,
dans une batterie au lithium-ion pour recouvrir l'électrode de batterie ou le séparateur de batterie avec un revêtement de protection.

2. Utilisation selon la revendication 1, dans laquelle l'émulsion aqueuse présente un taux de greffage apparent W, exprimé par la formule

$$W = w2/w1 \times 100$$

dans laquelle W représente un % en poids
w1 : représente le poids séché à l'étuve en grammes d'un film avant extraction, et
w2 : représente le poids séché à l'étuve en grammes d'un film après extraction tel que déterminé par le procédé défini, dans la spécification de 60 à 90 % en poids.

3. Utilisation selon la revendication 1 ou la revendication 2, dans laquelle la composition comprend en outre des particules inorganiques.

4. Utilisation selon la revendication 3, dans lequel les particules inorganiques sont des poudres d'oxyde métallique.

5. Utilisation selon l'une quelconque des revendications 1 à 4, dans laquelle la composition comprend en outre un sel choisi parmi l'hydroxyde de lithium, le silicate de lithium, l'hexafluorophosphate de lithium, le tétrafluoroborate de lithium, le perchlorate de lithium, le bis(trifluorométhanesulfonyl)imide de lithium, le bis(pentafluoroéthanesulfonyl)imide de lithium, le trifluorométhanesulfonate de lithium, l'hydroxyde de sodium, le perchlorate de sodium, l'hydroxyde de calcium, le perchlorate de calcium, le perchlorate de magnésium, le tétrafluoroborate de tétraéthylammonium, le bis(trifluorométhanesulfonyl)imide de triéthylméthylammonium, et le bis(trifluorométhanesulfonyl)imide de tétraéthylammonium.

Fig. 1

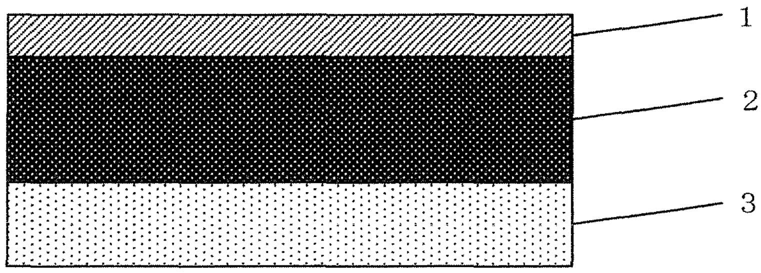


Fig. 2

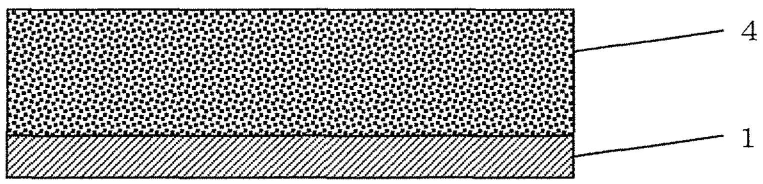

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2166028 A1
- JP 2007067352 A
- JP 2007161795 A
- WO 2011013604 A1
- JP SHO5060733 B
- JP SHO57126068 B
- JP HEI261246 B
- JP HEI7134989 B
- JP 3371301 B